# NEUE EUROPÄISCHE PATENTSCHRIFT

(11) **EP 2 087 213 B2**
(45) Veröffentlichungstag und Bekanntmachung des Hinweises auf die Entscheidung über den Einspruch: **22.01.2014**
(45) Hinweis auf die Patenterteilung: 13.04.2011
(21) Anmeldenummer: 06762145.8
(22) Anmeldetag: 24.06.2006
(51) Int. Cl.: F01M 13/04, B01D 45/08

(54) **VORRICHTUNG ZUM ABSCHEIDEN VON ÖLTEILCHEN AUS DEM KURBELGEHÄUSELÜFTUNGSGAS EINER BRENNKRAFTMASCHINE**
DEVICE FOR ELIMINATING OIL PARTICLES FROM THE CRANKCASE VENTILATION GAS IN AN INTERNAL COMBUSTION ENGINE
DISPOSITIF POUR SEPARER DES PARTICULES D'HUILE DU GAZ D'AERATION DU CARTER DE VILEBREQUIN DANS UN MOTEUR A COMBUSTION INTERNE

(30) Priorität: 25.06.2005 DE 202005009990 U
(43) Veröffentlichungstag der Anmeldung: 12.08.2009
(73) Patentinhaber: Hengst GmbH & Co. KG, 48147 Münster (DE)
(72) Erfinder: Meinig, Uwe, 88348 Bad Saulgau (DE); Pietschner, Sieghard, 48268 Greven (DE)
(74) Vertreter: Linnemann, Winfried
(86) Internationale Anmeldenummer: PCT/EP2006/006039
(87) Internationale Veröffentlichungsnummer: WO 2007/000281

(56) Entgegenhaltungen:
- EP-A- 1 068 890
- EP-A- 1 285 152
- US-A- 3 261 146

## Beschreibung

Die vorliegende Erfindung betrifft eine Vorrichtung zum Abscheiden von Ölteilchen aus dem Kurbelgehäuseentlüftungsgas einer Brennkraftmaschine, wobei die Vorrichtung in einem Strömungskanal des Kurbelgehäuseentlüftungsgases vom Kurbelgehäuse zu einem Ansaugtrakt der Brennkraftmaschine angeordnet ist und wobei die Vorrichtung einen Ölabscheider in Form eines Durchlasses für das Kurbelgehäuseentlüftungsgas mit einer Strömungsumlenkung aufweist, wodurch Ölteilchen an einer Prallfläche niederschlagbar und so aus dem Strom des Kurbelgehäuseentlüftungsgases abscheidbar sind, wobei ein in Strömungsrichtung des Kurbelgehäuseentlüftungsgases gesehen vor der Prallfläche liegender Zuströmquerschnitt in mehrere Teilzuströmquerschnitte aufgeteilt ist und wobei die Prallfläche eine geschlossene, durchbrechungsfreie Fläche ist.

Eine Vorrichtung der vorstehend genannten Art mit den angegebenen Merkmalen ist aus EP 1 068 890 A1 bekannt. In dieser Vorrichtung werden die Teilzuströmquerschnitte durch Düsen gebildet, in denen der Gasstrom beschleunigt wird, um dann auf eine raue, poröse Sammel- oder Prallfläche zu treffen. Eine Verstellung des aus dem Kurbelgehäuse abgeführten Gasvolumenstroms ist mit dieser Vorrichtung aber nicht möglich.

Das Dokument US 3 261 146 offenbart eine Luftfiltervorrichtung zum Entfernen von Feuchtigkeit und Fremdstoffen aus Druckluft. Primär an den Oberflächen eines Ringspalts, durch den der Luftstrom rotierend hindurchströmt, sammeln sich Feuchtigkeit und Fremdstoffe, die von dort nach unten in einen im Filterbetrieb geschlossenen Sammelraum ablaufen. Bei Wegfall des Luftstroms durch den Luftfilter öffnet sich selbsttätig ein Abschlammventil, um die gesammelten Fremdstoffe und die Feuchtigkeit aus dem Sammelraum abzuführen. Ein Verstellen oder Steuern des Luftvolumenstroms ist auch mit dieser Vorrichtung nicht möglich.

Aus EP 1 285 152 B1 ist eine Vorrichtung zum Entölen von Kurbelgehäuseentlüftungsgas einer Brennkraftmaschine bekannt, wobei die Vorrichtung mindestens einen Ölabscheider sowie einen den Ölabscheider umgehenden Umgehungskanal aufweist. Im Umgehungskanal ist mindestens ein Mittel vorgesehen, das abhängig von einem Differenzdruck den Umgehungskanal öffnet und schließt. Dabei sind der Umgehungskanal und das Mittel zum Öffnen und Schließen des Umgehungskanals so ausgebildet, dass bei geöffnetem Umgehungskanal infolge von Strömungsumlenkung und Prallabscheidung eine Entölung des Kurbelgehäuseentlüftungsgases im Umgehungskanal bewirkt wird. Im normalen Betrieb dieser Vorrichtung ist der Umgehungskanal allerdings geschlossen und der gesamte Volumenstrom des Kurbelgehäuseentlüftungsgases strömt durch den Ölabscheider, der hier vorzugsweise als Zyklon ausgeführt ist. Nur bei außergewöhnlich großen Mengen von Kurbelgehäuseentlüftungsgas wird zusätzlich der Umgehungskanal geöffnet, wonach dann der Ölabscheider, hier der Zyklon, und der Umgehungskanal parallel vom Kurbelgehäuseentlüftungsgas durchströmt werden. Im Hinblick auf die relativ feinen Partikelgrößen der Ölteilchen im Kurbelgehäuseentlüftungsgas besitzt der Umgehungskanal mit dem darin angeordneten Mittel zum Öffnen und Schließen des Umgehungskanals nur eine relativ schlechte Ölabscheidewirkung, so dass mit diesem Umgehungskanal und dem darin vorgesehenen Mittel zum Öffnen und Schließen des Umgehungskanals nur in Verbindung mit einem anderen Ölabscheider, hier vorzugsweise einem Zyklon, ein ausreichender Gesamtabscheidegrad erzielt wird.

Aus DE 100 51 307 A1 sind eine Vorrichtung zur Trennung von Gas und Flüssigkeitspartikeln aus einem in einer Leitung strömenden Gas-Flüssigkeitspartikel-Gemisch und ein Verfahren zur Trennung derselben bekannt. Diese Vorrichtung umfasst eine Leitung, in der das Gemisch strömt. In der Leitung ist ein Umlenkelement angeordnet, das Separationswirbel in dem strömenden Gemisch hervorruft und so Gas einerseits und Flüssigkeitspartikel andererseits voneinander trennt. Das Umlenkelement ist hier bevorzugt in Form einer Prallplatte ausgebildet, die senkrecht zur Längsrichtung der Leitung ausgerichtet ist. Auch bei dieser bekannten Vorrichtung ist der Abscheidegrad im Hinblick auf relativ feine Partikelgrößen, wie sie insbesondere im Kurbelgehäuseentlüftungsgas einer Brennkraftmaschine vorliegen, relativ niedrig. Damit eignet sich diese bekannte Vorrichtung nur für Anwendungen, bei denen die Flüssigkeitspartikel relativ groß sind.

Die DE 103 20 215 A1 zeigt eine Ölabscheidevorrichtung für eine Brennkraftmaschine, die in einen Strömungsweg für mit Ölteilchen beladenes Blow-by-Gas zwischen dem Kurbelgehäuse und dem Ansaugtrakt der Brennkraftmaschine eingeschaltet ist und einen Ölabscheider mit einem verengten Durchlass aufweist, durch welchen der Strom des ölbeladenen Blow-by-Gases hindurchgeleitet und abgelenkt wird, wobei Ölteilchen an einer Wandung abgeschieden werden, von der die Ölteilchen in einem Ölrücklauf zum Kurbelgehäuse zurückströmen. Weiter ist hier vorgesehen, dass der mindestens eine Durchlass von einem Spalt kleiner, variabler Spaltweite und großen Spaltdurchtrittsquerschnitts gebildet ist, wobei die Spaltweite abhängig vom Volumenstrom des Blow-by-Gases durch den Spalt gegen Federkraft verändert wird. Die Federkraft kann dabei durch eine Schraubenfeder oder eine oder mehrere Federzungen aufgebracht werden. Die Abscheidung der Ölteilchen erfolgt durch Umlenkung und Niederschlagen an einer Prallfläche, die entweder eine die Schraubenfeder mit Abstand radial umgebende Fläche oder eine an der Federzunge ausgebildete Prallfläche ist. Auch bei dieser bekannten Vorrichtung ist der Abscheidewirkungsgrad wegen der vergleichsweise geringen Umlenkung der Gasströmung nur bei relativ großen Ölteilchen hoch, während er für feine Ölteilchen, die im Kurbelgehäuseentlüftungsgas überwiegen, geringer wird.

Die ältere, nachveröffentlichte DE 10 2004 049 089 A1 zeigt eine Vorrichtung zur Abscheidung von Flüssigkeit aus einem Gasstrom eines Kurbelgehäuses einer Brennkraftmaschine, mit einem mit dem Kurbelgehäuse strömungsverbundenen Eingangskanal, einem mit einem Saugrohr der Brennkraftmaschine strömungsverbundenen Ausgangskanal und einem zwischen dem Eingangskanal und dem Ausgangskanal angeordneten Abscheidungsventil, dass jeweils einen axial bzgl. einer Ventilachse beweglichen Schließkörper und einen mit dem Schließköper zusammenwirkenden Ventilsitz aufweist. Dabei sind mehrere Abscheidungsventile vorgesehen, die zueinander parallel geschaltet sind und als Feinabscheider und/oder Feinstabscheider dienen.

Bevorzugt sind die Schließkörper der Abscheidungsventile jeweils tellerförmig, plattenförmig, gitterförmig oder lochblechförmig ausgebildet. Bei einem Ausführungsbeispiel der Vorrichtung gemäß dieser Schrift sind die Schließkörper und die Ventilöffnungen gitterförmig oder lochblechförmig ausgebildet und weisen mehrere in Zeilen und Spalten angeordnete Durchgangsöffnungen auf, wobei zwischen den Durchgangsöffnungen jeweils Ventilstege angeordnet sind. Die Durchgangsöffnungen der Schließkörper sind derart zu den Durchgangsöffnungen der Ventilöffnungen verschoben, dass beim Anliegen des Schließkörpers am Ventil sitzt die Durchgangsöffnungen der Schließkörper durch die Ventilstege der Ventilöffnungen und umgekehrt verschlossen sind. Durch die gitterförmige Struktur werden beim Abheben des Schließkörpers vom Ventilsitz viele enge Ventilspalten gebildet, die eine gute Feinabscheidung ermöglichen sollen.

Als nachteilig wird bei dieser Vorrichtung angesehen, dass sie eine relativ geringe Abscheidewirkung im Hinblick auf die im Gasstrom mitgeführten insbesondere feinen Öltröpfchen aufweist. Bei der Ausführung der Vorrichtung mit gitter- oder lochblechförmigen Schließkörpern und Ventilöffnungen besteht eine Gefahr für ein Ventilflattern, dass für die Funktion der Vorrichtung ungünstig ist und zu einem vorzeitigen Verschleiß und damit Ausfall der Vorrichtung führen kann. Zudem ist die genaue geometrische Zuordnung zwischen Stegen am beweglichen Element und den Durchtritten am feststehenden Element in der Praxis mit begrenztem technischen Aufwand nur schwer zu erreichen. Hierzu sind eine präzise radiale Lagerung und eine Verdrehsicherung der Einheit erforderlich. Eine solche Anordnung wird durch Ablagerungen und Verschmutzungen in ihrer Funktion beeinträchtigt.

Aus der älteren, nachveröffentlichten DE 20 2004 013 123 U1 ist ein pneumatisches Druckregelventil bekannt, das im Verlauf einer Gasleitung angeordnet ist, deren Durchlass mittels des Druckregelventils in Abhängigkeit vom Differenzdruck zwischen einem oder mehreren an mindestens einem Eingang des Druckregelventils anliegenden Gasdrücken selbsttätig veränderbar ist. Dabei ist im Druckregelventil eine Stellmembran vorgesehen, die einerseits von einem Referenzdruck und andererseits von dem Gasdruck oder dem Gasdrücken sowie von einer Regelfeder beaufschlagt ist, wodurch bei Veränderung des Referenzdrucks zwischen den an die Stellmembran angrenzenden Bereichen die Stellmembran verstellt wird und die Stellmembran selbst oder ein von der Stellmembran betätigter Schließkörper den Durchlass durch einen Abströmquerschnitt des Druckregelventils vergrößert oder verkleinert. Dabei bildet eine an den Abströmquerschnitt membranseitig angrenzende Struktur des Druckregelventils einen Anschlag für die Stellmembran oder für den Schließkörper in deren Schließstellung. Weiterhin ist im Druckregelventil mindestens ein Vor-Anschlag so angeordnet, dass bei Bewegung der Stellmembran in Schließrichtung die Stellmembran oder der Schließkörper zuerst in Kontakt mit dem Vor-Anschlag gelangt und wobei bei weiterer Bewegung der Stellmembran in Schließrichtung die Stellmembran oder der Schließkörper dann unter (weiterer) elastisch-flexibler Verformung den Durchlass weiter verkleinert und in einer Endstellung auch in Kontakt mit dem Anschlag gelangt. Weiterhin ist dabei der Vor-Anschlag durch mindestens eine im Abströmquerschnitt liegende membran- oder schließkörperseitig flächige, durchbrochene Vor-Anschlagstruktur gebildet.

Mit der flächigen, durchbrochenen Vor-Anschlagstruktur soll dem Druckregelventil neben seiner Druckregelfunktion zusätzlich die Funktion eines Flüssigkeitsabscheiders zumindest in einem gewissen Umfang verliehen werden. Die durchbrochene Vor-Anschlagstruktur liegt im Abströmquerschnitt, so dass ein mit Flüssigkeitströpfchen befrachtetes Gas zunächst etwa in Radialrichtung von außen nach innen parallel zur Membran oder zum Schließkörper strömt und dann in Axialrichtung umgelenkt wird und durch die einzelnen Durchbrechungen der Vor-Anschlagstruktur strömt. Dabei prallen zumindest die größeren Flüssigkeitströpfchen innerhalb der Durchbrechungen der Vor-Anschlagstruktur auf letztere auf und können so aus dem Gasstrom abgeschieden werden.

Bei diesem Druckregelventil dient die Vor-Anschlagstruktur in erster Linie dazu, das Druckregelverhalten im Sinne eines möglichst konstanten Drucks auf der Eingangsseite des Druckregelventils zu beeinflussen. Die Membran oder der Schließkörper bilden hier keine Prallfläche, weil die Gasströmungsrichtung zunächst parallel zur Ebene der Membran oder des Schließkörpers radial von außen nach innen verläuft und dann in eine axiale Richtung durch die Durchbrechungen der Vor-Anschlagstruktur umgelenkt wird. Zudem ist zur Erreichung des zuvor erwähnten Abscheidungseffekts für im Gas mitgeführte Flüssigkeitströpfchen ein vergrößerter Bauraum erforderlich, was bei engen Platzverhältnissen zu Unterbringungsproblemen führen kann.

Das Dokument WO 01/92690 A1 zeigt eine weitere Vorrichtung zum Entölen von Kurbelgehäuseentlüftungsgasen einer Brennkraftmaschine. Die Figur 6 dieses Dokuments zeigt, dass die Vorrichtung eine Prallscheibe aufweist, vor der ein einheitlicher, kreisförmiger Zuströmquerschnitt angeordnet ist.

Das Dokument JP 2004-137 964 A zeigt einen Ölabscheider mit einer Prallfläche und einer den in Strömungsrichtung vor der Prallfläche liegenden Zuströmquerschnitt in mehrere Teilzuströmquerschnitte aufteilenden Lochplatte, wie aus den Figuren 3 bis 5 dieses Dokuments hervorgeht. Die Lochplatte entspricht der in dem oben zitierten Dokument EP 1 068 890 A1 offenbarten Struktur mit einer Vielzahl von Bohrungen.

Das Dokument US 4 541 399 A zeigt eine Kurbelgehäuseentlüftungsanordnung für eine Brennkraftmaschine. Zur Ölabscheidung aus dem Kurbelgehäuseentlüftungsgas dienen Prallflächen mit jeweils einem davor liegenden, einheitlichen Zuströmquerschnitt.

Für die vorliegende Erfindung stellt sich deshalb die Aufgabe, eine Vorrichtung der eingangs genannten Art zu schaffen, die die vorstehend dargelegten Nachteile vermeidet und mit der bei einem geringen technischen Aufwand und einfacher Herstellbarkeit ein verbesserter Abscheidewirkungsgrad, auch im Hinblick auf feine Ölteilchen, erreicht wird. Dabei soll die Vorrichtung auch als Steuerorgan zur Steuerung des aus dem Kurbelgehäuse abgeführten Gasvolumenstroms dienen.

Die Lösung der Aufgabe gelingt erfindungsgemäß mit einer Vorrichtung der eingangs genannten Art, die dadurch gekennzeichnet ist, dass die Prallfläche an einem in Strömungsrichtung des Kurbelgehäuseentlüftungsgases gesehen hinter den Teilzuströmquerschnitten liegenden, in Schließrichtung mit einer Kraft vorbelasteten Ventilkörper ausgebildet ist, der durch den Differenzdruck zwischen dem Kurbelgehäuse und dem Ansaugtrakt gegen die Vorbelastungskraft mittels des Kurbelgehäuseentlüftungsgases in Öffnungsrichtung verstellbar ist, wobei die Teilzuströmquerschnitte durch eine gitterartige Struktur mit einer Anordnung von im Querschnitt mehreckigen Kanälen, die die Teilzuströmquerschnitte darstellen, oder durch eine lochplattenartige Struktur mit einer Anordnung von im Querschnitt ringabschnittförmigen, konzentrischen Kanälen, die die Teilzuströmquerschnitte darstellen, gebildet sind.

Mit der Erfindung wird vorteilhaft erreicht, dass das Kurbelgehäuseentlüftungsgas bei seinem Anströmen der Prallfläche eine wesentlich schärfere Umlenkung erfährt als bei üblichen Vorrichtungen ohne Zuströmung durch Teilzuströmquerschnitte. Dies führt vorteilhaft zu höheren Fliehkräften, die zu einem verbesserten Niederschlagen und Abscheiden von Ölteilchen aus dem Gasstrom führen. Durch die Teilzuströmquerschnitte, die jeweils einen kleineren Strömungsquerschnitt aufweisen als der Zuströmquerschnitt an sich, wird der Strom des Kurbelgehäuseentlüftungsgases zwangsgeführt und an einem Strömungsverlauf mit relativ großen Radien im Bereich der Strömungsumlenkung gehindert. Auch ein Durchströmen der Prallfläche ist hier ausgeschlossen, weil die Prallfläche geschlossen und durchbrechungsfrei ist. Statt dessen muss nun jeder Teilstrom des Kurbelgehäuseentlüftungsgases, der durch die Teilzuströmquerschnitte strömt, eine sehr scharfe Strömungsumlenkung mit kleinen Radien durchlaufen und bis zum radial äußeren Rand der Prallfläche strömen, was die Abscheidung auch feiner Ölteilchen bewirkt. Auf diese Weise wird mit einer relativ einfachen, nur einen geringen zusätzlichen technischen Aufwand erfordernden Maßnahme der Wirkungsgrad der Ölabscheidung insbesondere im Hinblick auf feine Ölteilchen wesentlich erhöht. Zugleich hat die Vorrichtung neben ihrer Funktion als Ölabscheider zusätzlich eine Funktion als Steuerorgan zur Steuerung des aus dem Kurbelgehäuse abgeführten Gasvolumenstroms. Hierbei passt sich die Vorrichtung hinsichtlich des Durchlassquerschnitts an die Menge des jeweils aktuell anfallenden Kurbelgehäuseentlüftungsgases der Brennkraftmaschine an, wodurch das Abführen des Kurbelgehäuseentlüftungsgases aus dem Kurbelgehäuse selbsttätig bedarfsgerecht an die im Betrieb der Brennkraftmaschine stark schwankenden Mengen des Kurbelgehäuseentlüftungsgases angepasst wird und damit der Druck im Kurbelgehäuse im vorgeschriebenen Sollbereich bleibt. Die Teilzuströmquerschnitte sind durch eine gitterartige Struktur mit einer Anordnung von im Querschnitt mehreckigen Kanälen, die die Teilzuströmquerschnitte darstellen, oder durch eine lochplattenartige Struktur mit einer Anordnung von im Querschnitt ringabschnittförmigen, konzentrischen Kanälen, die die Teilzuströmquerschnitte darstellen, gebildet. Die gitterartige Struktur ist einerseits einfach herstellbar und einfach in den Zuströmquerschnitt integrierbar und bietet andererseits die gewünschte Aufteilung des Zuströmquerschnitts in mehrere oder viele Teilzuströmquerschnitte. Auch mit der zweiten Struktur wird der Zuströmquerschnitt wirksam in mehrere Teilzuströmquerschnitte aufgeteilt, wobei im Vergleich zur zuvor genannten Struktur hier ein größerer Gesamtströmungsquerschnitt erzielt werden kann, wodurch die Struktur einen geringeren Strömungswiderstand für das Kurbelgehäuseentlüftungsgas darstellt. Da hier jeder Teilzuströmquerschnitt eine relativ große Querschnittsfläche hat, werden störende Verstopfungen einzelner Teilzuströmquerschnitte vermieden.

Bevorzugt ist weiter vorgesehen, dass die Teilzuströmquerschnitte parallel zueinander verlaufen. Hierdurch ergibt sich eine besonders einfache geometrische Gestaltung, wodurch eine einfache und kostengünstige Herstellung gewährleistet ist. Außerdem unterliegen so alle Gasteilströme, die die Teilzuströmquerschnitte in Richtung zur Prallfläche durchströmen, an dieser der gleichen Strömungsumlenkung, so dass für jeden Gasteilstrom die Abscheidewirkung im Prinzip identisch ist.

Zur Erzielung einer maximalen Abscheidewirkung wird weiter vorgeschlagen, dass die Teilzuströmquerschnitte jeweils rechtwinkelig zu der Prallfläche verlaufen. Damit unterliegt jeder Gasteilstrom einer Strömungsumlenkung um 90°, was eine wirksame Abscheidung der Ölteilchen begünstigt.

Zur Erzielung einer gleichmäßigen Strömung unmittelbar vor der Prallfläche ist bevorzugt vorgesehen, dass die Teilzuströmquerschnitte jeweils die Form eines länglichen Kanals oder einer Bohrung oder einer Düse haben. Auf diese Weise werden störende Strömungsturbulenzen innerhalb der Gasteilströme vermieden. Außer von der Schärfe oder dem Radius der Strömungsumlenkung im Bereich der Prallfläche hängt der Abscheidegrad der Vorrichtung auch von der Gasgeschwindigkeit im Bereich der Strömungsumlenkung ab, wobei eine höhere Gasgeschwindigkeit eine bessere Ölabscheidung bewirkt, allerdings im Grundsatz auch eine höhere Druckdifferenz benötigt. Um eine höhere Gasgeschwindigkeit in diesem Bereich zu erzielen, können die Teilzuströmquerschnitte, wie erwähnt, jeweils die Form einer Düse haben.

Um die Abscheidewirkung der Vorrichtung zu steigern, ist bevorzugt vorgesehen, dass die Prallfläche radial außen unter Ausbildung eines einen Teil des Durchlasses bildenden Ringspalts von einer Umfangswand des Strömungskanals umgeben ist. Der Ringspalt sorgt für eine zweite scharfe Strömungsumlenkung, die der ersten Umlenkung entgegengerichtet ist und die eine weitere Ölabscheidung aus dem Gasstrom bewirkt. Dabei prallen Öltröpfchen, die noch nicht an der Prallfläche des Ventilkörpers niedergeschlagen wurden, aufgrund ihrer Massenträgheit auf die Umfangswand und werden dort niedergeschlagen.

Eine Ausgestaltung der Vorrichtung schlägt vor, dass bei fehlendem Differenzdruck zwischen dem Kurbelgehäuse und dem Ansaugtrakt die Teilzuströmquerschnitte durch den Ventilkörper weitgehend gasdicht verschließbar sind. Da insbesondere ein Differenzdruck dann nicht vorliegt, wenn die zugehörige Brennkraftmaschine stillsteht, wird so vermieden, dass Kurbelgehäuseentlüftungsgase, d.h. Kohlenwasserstoffemissionen, aus dem Kurbelgehäuse in die Umwelt austreten oder durch thermische Effekte in den Ansaugtrakt der Brennkraftmaschine gelangen und dort den Luftfilter, einen Luftmassenmesser, Drosselklappen oder weitere dort angeordnete Funktionselemente verschmutzen und in ihrer Funktion stören.

Zwecks Erzielung einer einfachen und zuverlässigen technischen Lösung ist bevorzugt die Kraft, welche den Ventilkörper in Schließrichtung vorbelastet, die Kraft mindestens einer Feder. Gut geeignet sind hier insbesondere Schraubenfedern, die in ihren Formen und Federeigenschaften in weiten Bereichen variabel und für den jeweiligen Einsatzzweck leicht anpassbar sind. Eine alternative Lösung ist der Einsatz einer Mäanderfeder.

Bevorzugt ist weiter vorgesehen, dass bei in Einsatzstellung befindlicher Vorrichtung die Strömungsrichtung in den Teilzuströmquerschnitten im Wesentlichen von unten nach oben verläuft. Diese bevorzugte Strömungsrichtung unterstützt die Abführung und Ableitung der an der Prallfläche niedergeschlagenen und so aus dem Gasstrom abgetrennten Ölanteile durch Schwerkraftwirkung, so dass auch hinsichtlich der Ableitung des niedergeschlagenen Öls keine aufwendigen technischen Maßnahmen erforderlich sind.

Zur Unterstützung der Ableitung des niedergeschlagenen Öls ist bevorzugt radial außen von der Prallfläche und unterhalb von dieser in der Vorrichtung ein eingetiefter Ableitbereich für an der Prallfläche niedergeschlagenes, von dieser abtropfendes oder abfließendes Öl ausgebildet. In diesen Ableitbereich gelangt auch ggf. an der Umfangswand niedergeschlagenes Öl, sodass dafür keine separaten Ableitmittel vorgesehen werden müssen.

Aus Gründen einer einfachen geometrischen Gestaltung und einer kostengünstigen Herstellbarkeit der Vorrichtung hat bevorzugt der Ableitbereich die Form einer nach oben offenen, umlaufenden Rinne.

Eine weitere Ausgestaltung schlägt vor, dass der Ableitbereich mit einer außerhalb des von dem Kurbelgehäuseentlüftungsgas durchströmten Teils der Vorrichtung liegenden Ölsammelkammer verbunden ist. Hiermit wird die Möglichkeit geschaffen, das abgetrennte und abgeleitete Öl vorübergehend zu sammeln und aufzubewahren, bis es aus der Ölsammelkammer entnommen oder abgeleitet werden kann.

Eine bevorzugte Weiterbildung sieht diesbezüglich vor, dass die Ölsammelkammer über ein Ventil und einen Ölrückführkanal mit dem Kurbelgehäuse der Brennkraftmaschine verbunden ist. Über das Ventil kann der Ölrückführkanal dann freigegeben werden, wenn der Betriebszustand der Brennkraftmaschine ein Rückfließen des Öls aus der Ölsammelkammer in das Kurbelgehäuse gestattet; dies ist insbesondere bei Stillstand der Brennkraftmaschine gegeben.

Bevorzugt ist das zuvor erwähnte Ventil ein differenzdruckgesteuertes Ventil, das bei einem mit dem Druck im Ansaugtrakt überstimmenden oder darunterliegenden Druck im Kurbelgehäuse selbsttätig öffnet. Ein derartiges Ventil kann beispielsweise als Blattventil ausgeführt sein, das konstruktiv sehr einfach ist und die gewünschte selbsttätige Funktion in Abhängigkeit vom Differenzdruck aufweist. Da, wie oben schon erwähnt, der Differenzdruck insbesondere bei Stillstand der Brennkraftmaschine fehlt, erfolgt über das Ventil vorzugsweise ein Rückführen des abgeschiedenen Öls in das Kurbelgehäuse der Brennkraftmaschine bei deren Stillstand. Im Betrieb der Brennkraftmaschine liegt ein solcher Differenzdruck vor, dass das Ventil geschlossen wird, so dass auch kein Kurbelgehäuseentlüftungsgas durch den Ölrückführkanal in die Vorrichtung gelangen kann. Das Ventil ist zweckmäßig so ausgelegt, dass es bei fehlender Druckdifferenz, d.h. bei Stillstand der Brennkraftmaschine, offen ist.

Weiter wird vorgeschlagen, dass der Ölabscheider in Form des Durchlasses mit Strömungsumlenkung und mit dem in mehrere Teilzuströmquerschnitte aufgeteilten Zuströmquerschnitt der einzige der Brennkraftmaschine zugeordnete Ölabscheider für das Kurbelgehäuseentlüftungsgas ist. Eine derartige Ausgestaltung der Vorrichtung ist deshalb vorteilhaft, weil sie besonders einfach und kompakt ausgeführt werden kann und weil sie dennoch schon einen guten Abscheidegrad, auch hinsichtlich feiner Ölteilchen, erreicht. Damit können in vielen Anwendungsfällen die gewünschten Abscheidegrade schon mit dieser einfachen Ausführung der Vorrichtung erzielt werden.

Falls besonders hohe Ansprüche an den Abscheidegrad der Vorrichtung gestellt werden, besteht die Möglichkeit, dass zu dem Ölabscheider in Form des Durchlasses mit Strömungsumlenkung und mit dem in mehrere Teilzuströmquerschnitte aufgeteilten Zuströmquerschnitt mindestens ein weiterer Ölabscheider für das Kurbelgehäuseentlüftungsgas parallel oder in Reihe geschaltet ist. In dieser alternativen Ausführung der Vorrichtung erfolgt das Abscheiden der Ölteilchen also in zwei oder mehr Ölabscheidern, wodurch ein höherer Gesamtwirkungsgrad bei der Ölabscheidung erreichbar ist.

Eine bevorzugte Weiterbildung sieht vor, dass der mindestens eine weitere Ölabscheider für das Kurbelgehäuseentlüftungsgas ein zu dem Ölabscheider in Form des Durchlasses mit Strömungsumlenkung und mit dem in mehrere Teilzuströmquerschnitte aufgeteilten Zuströmquerschnitt unterschiedliches Funktionsprinzip aufweist. Durch die Anwendung von zwei oder sogar noch mehr unterschiedlichen Funktionsprinzipien kann durch Kombination unterschiedlicher, jeweils für ein Funktionsprinzip typischer Abscheidungsspektren ein sehr breites Gesamtabscheidungsspektrum erreicht werden. Dabei sollte darauf geachtet werden, dass durch die zwei oder mehr Ölabscheider das gesamte Spektrum der im Kurbelgehäuseentlüftungsgas auftretenden Ölteilchengrößen abgedeckt wird.

Eine weitere Ausgestaltung sieht vor, dass die zwei oder mehr Ölabscheider jeweils einen unterschiedlichen Öffnungsdruck des Kurbelgehäuseentlüftungsgases, ab dem der betreffende Ölabscheider durchströmt wird, aufweisen. Hier wird die Zahl der aktuell durchströmten Ölabscheider vom Druck des Kurbelgehäuseentlüftungsgases und damit von dessen Menge abhängig gemacht, was ein weiterer Beitrag zur Erzielung eines hohen Gesamtwirkungsgrades bei der Ölabscheidung aus dem Kurbelgehäuseentlüftungsgas ist.

Zur Erzielung einer kompakten Anordnung auch in den zuletzt beschriebenen Ausführungen der Vorrichtung mit zwei oder mehr Ölabscheidern ist bevorzugt vorgesehen, dass die zwei oder mehr Ölabscheider in einer Einheit baulich und räumlich zusammengefasst sind.

Als weiterer Ölabscheider eignet sich innerhalb der erfindungsgemäßen Vorrichtung insbesondere ein Fliehkraft- oder Koaleszerabscheider. Beide Arten von Ölabscheidern sind insbesondere für die Abscheidung von besonders feinen Ölteilchen geeignet, wodurch sich diese in der Kombination mit dem ersten Ölabscheider, in dem die Abscheidung durch Strömungsumlenkung und Prallabscheidung erfolgt, hinsichtlich des abscheidbaren Spektrums an Ölteilchengrößen gut ergänzen.

Um die Teilzuströmquerschnitte auf technisch möglichst einfache Art zu bilden, ist bevorzugt im Zuströmquerschnitt eine diesen in die mehreren Teilzuströmquerschnitte aufteilende, einzelne Struktur angeordnet. Die Struktur kann einstückig mit der übrigen Vorrichtung hergestellt oder als zunächst separates Strukturelement in den Zuströmquerschnitt eingebaut sein.

Alternativ besteht die Möglichkeit, dass im Zuströmquerschnitt wenigstens zwei diesen in die mehreren Teilzuströmquerschnitte aufteilende, untereinander axial beabstandete Strukturen angeordnet sind, wobei die Teilzuströmquerschnitte der einen Struktur relativ zu den Teilzuströmquerschnitten der anderen Struktur einen Versatz quer zur Längsrichtung der Teilzuströmquerschnitte aufweisen. In dieser Ausführung der Vorrichtung wird durch den Versatz eine erste Strömungsumlenkung mit Ölabscheidung schon zwischen und in den beiden Strukturen erreicht, was den Gesamtwirkungsgrad der Vorrichtung erhöht.

Um den durch die Struktur hervorgerufenen Strömungswiderstand möglichst gering zu halten, ist der Querschnitt der mehreckigen Kanäle bevorzugt jeweils rechteckig oder quadratisch oder parallelogrammförmig oder sechseckig. In dieser Ausführung kann ein großer Gesamtströmungsquerschnitt im Verhältnis zur Gesamtfläche der Struktur erzielt werden, wobei die Struktur gleichzeitig mechanisch ausreichend stabil bleibt.

Um zu vermeiden, dass der Ventilkörper bei seiner differenzdruckabhängigen Bewegung innerhalb der Vorrichtung verkantet und es so zu Funktionsstörungen der Vorrichtung kommt, weist zweckmäßig der Ventilkörper an seiner der Prallfläche abgewandten Seite einen Führungsabschnitt für eine axial bewegliche Führung in dem Strömungskanal auf.

Eine weitere Ausgestaltung schlägt vor, dass ein Anschlag zur Begrenzung des axialen Bewegungsweges des Ventilkörpers in dessen Öffnungsrichtung vorgesehen ist. Der Öffnungsanschlag kann beispielsweise im oder am Strömungskanal angeordnet oder angeformt sein. Auf diese Weise wird die maximale Größe des Durchlasses für das Kurbelgehäuseentlüftungsgas durch die Vorrichtung auf ein vorgebbares Maß begrenzt. Weiterhin wird dadurch vermieden, dass der Abscheidegrad bei zu großer Ventilöffnung (Entfernung der Ventilplatte von der Zuströmstruktur) einbricht.

Weiter kann in der Vorrichtung ein Schließanschlag zur Begrenzung des axialen Bewegungsweges des Ventilkörpers in dessen Schließrichtung vorgesehen sein. Der Schließanschlag stellt eine wirksame Maßnahme gegen ein Ankleben und Festfrieren des Ventilkörpers an der die Teilzuströmquerschnitte bildenden Struktur dar und vermeidet dadurch verursachte Funktionsstörungen. Zudem erfolgt hier eine Ölabscheidung auch schon bei kleinen Mengen an Kurbelgehäuseentlüftungsgas, auch wenn dessen Druck noch so niedrig ist, dass der Ventilkörper nicht angehoben wird.

Eine weitere Ausgestaltung der erfindungsgemäßen Vorrichtung schlägt vor, dass der Ventilkörper zur Bildung eines Stromregelventils mit einem zweiten Durchlassquerschnitt in zu dem Durchlass, in dem die Ölabscheidung erfolgt, entgegengesetzten Sinn zusammenwirkt. Auf diese Weise wird insbesondere eine wirksame und definierte Begrenzung der Menge des Kurbelgehäuseentlüftungsgases, die aus dem Kurbelgehäuse durch die Vorrichtung in den Ansaugtrakt der Brennkraftmaschine gelangen kann, erreicht. Gleichzeitig wird hiermit in Verbindung mit einer Belüftung des Kurbelgehäuses mit Frischluft der Frischluftdurchsatz auf betrieblich sinnvolle Mengen begrenzt. Dies sorgt insbesondere dafür, dass die Brennkraftmaschine über das Kurbelgehäuseentlüftungsgas nicht mit zu viel zusätzlicher Verbrennungsluft und/oder zu viel zusätzlichem Brennstoff beaufschlagt wird, was insbesondere für einen stabilen Leerlauf der Brennkraftmaschine wichtig ist.

In einer konkreteren Weiterbildung ist bevorzugt der Ventilkörper abströmseitig mit einem konischen oder schrägen Abschnitt, der von dem zweiten Durchlassquerschnitt umgeben ist, ausgeführt. Auf diese Weise lässt sich die gewünschte Funktion der Stromregelung auf technisch sehr einfache Art und Weise in die Vorrichtung integrieren, was auch bei Ausstattung der Vorrichtung mit dieser weiteren Funktion die Herstellungskosten niedrig hält. Schließlich ist erfindungsgemäß für die mit Stromregelventil ausgeführte Ausgestaltung der Vorrichtung noch vorgesehen, dass der Ventilkörper mit mindestens einem Gaskanal ausgebildet ist, der bei den zweiten Durchlassquerschnitt verschließendem Ventilkörper von Kurbelgehäuseentlüftungsgas durchströmbar ist. Auf diese Weise wird gewährleistet, dass auch bei einem hohen Differenzdruck, der zu einem Verschieben des Ventilkörpers gegen die Federkraft in seine Endstellung führt, ein Mindestströmungsquerschnitt für das Kurbelgehäuseentlüftungsgas durch die Vorrichtung frei bleibt.

In der Ausführung der Vorrichtung mit integriertem Stromregelventil lässt sich die Vorrichtung vorteilhaft für eine einfache und wirksame Kurbelgehäusebelüftung verwenden, weil die Vorrichtung den Frischluftstrom, der dem Kurbelgehäuse zugeführt wird, selbsttätig auf betrieblich günstige Größen einstellt.

Im Folgenden werden Ausführungsbeispiele der Erfindung anhand einer Zeichnung erläutert. Die Figuren der Zeichnung zeigen:
- Figur 1: eine Vorrichtung in einer ersten Ausführung im Längsschnitt,
- Figur 2 bis Figur 6: unterschiedliche, in einem Zuströmquerschnitt der Vorrichtung gemäß Figur 1 anzuordnende Strukturen in fünf verschiedenen Ausgestaltungen, wobei die Figur 4 eine Struktur zeigt, die nicht eine Ausführungsform der Erfindung ist,
- Figur 7: eine Brennkraftmaschine, die mit der Vorrichtung ausgestattet ist, in einer schematischen Ansicht,
- Figur 8: einen vergrößerten Ausschnitt aus der Vorrichtung gemäß Figur 1 im Längsschnitt,
- Figur 9: einen Ausschnitt aus einer dem Stand der Technik entsprechenden Vorrichtung in gleicher Darstellung wie in Figur 8,
- Figur 10: die Vorrichtung in einer weiteren Ausführung, ebenfalls im Längsschnitt,
- Figur 11 und Figur 12: die Vorrichtung in einer weiteren Ausführung im geöffneten und geschlossenen Zustand, jeweils im Längsschnitt,

- Figur 13 und Figur 14: die Vorrichtung in einer weiteren Ausgestaltung in gleicher Darstellung wie in den Figuren 11 und 12,
- Figur 15 und Figur 16: die Vorrichtung in einer weiteren Ausgestaltung in gleicher Darstellung wie in den Figuren 11 und 12,
- Figur 17: die Vorrichtung aus Figur 16 im Querschnitt gemäß der Schnittlinie B-B in Figur 16,
- Figur 18: die Vorrichtung in einer weiteren Ausgestaltung in einer Teil-Draufsicht,
- Figur 19: die Vorrichtung aus Figur 18 im Querschnitt entlang der Schnittlinie C-C in Figur 18,
- Figur 20: die Vorrichtung in einer weiteren Ausgestaltung in einer Teil-Draufsicht,
- Figur 21 bis Figur 23: die Vorrichtung aus Figur 20 im Querschnitt entlang der Schnittlinie D-D in Figur 20, in drei unterschiedlichen Betriebszuständen, und
- Figur 24: die Vorrichtung in einer weiteren Ausführung im Längsschnitt.

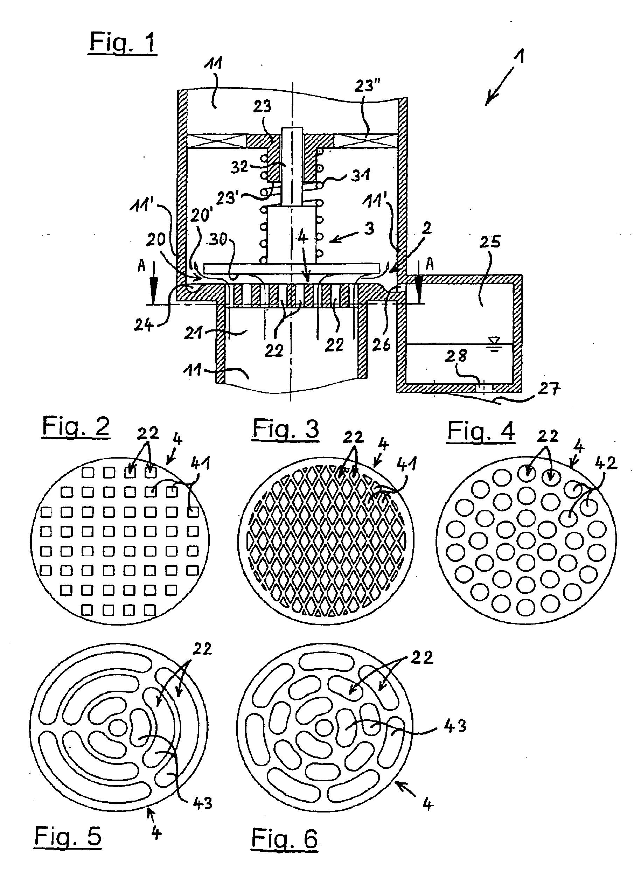

Wie die Figur 1 der Zeichnung zeigt, ist die Vorrichtung 1 in einem Strömungskanal 11 für das Kurbelgehäuseentlüftungsgas einer Brennkraftmaschine angeordnet, wobei der hier sichtbare Abschnitt des Strömungskanals 11 die Form eines im Durchmesser gestuften Rohrs hat. Die Strömungsrichtung des Kurbelgehäuseentlüftungsgases verläuft hier von unten nach oben. Im unteren, im Durchmesser kleineren Teil des Strömungskanals 11 ist eine Struktur 4 angeordnet, die einen zuvor einheitlichen Zuströmquerschnitt 21 in eine Vielzahl von Teilzuströmquerschnitten 22 aufteilt. Im Beispiel gemäß Figur 1 verlaufen dabei die Teilzuströmquerschnitte 22 alle parallel zueinander und parallel zur Längsrichtung des Strömungskanals 11.

Abströmseitig von der Struktur 4, hier also oberhalb der Struktur 4, ist eine Prallfläche 30 vorgesehen, die hier durch die Unterseite eines in Axialrichtung verschiebbaren Ventilkörpers 3 gebildet ist. Der Ventilkörper 3 besitzt in seinem oberen, von der Struktur 4 abgewandten Teil einen Führungsabschnitt 32, mit dem der Ventilkörper 3 im oberen Teil des Abströmkanals 11 axial verschieblich geführt ist. Hierzu ist zentral im oberen sichtbaren Teil des Strömungskanals 11 ein Führungskörper 23 über Rippen 23" gehalten. Eine untere Stirnseite des Körpers 23 bildet einen Anschlag 23' zur Begrenzung des axialen Verschiebungsweges des Ventilkörpers 3 in Richtung nach oben. Der Ventilkörper 3 ist durch eine Schraubenfeder 31 mit einer Vorbelastungskraft, die nach unten, also im Hinblick auf die Struktur 4 in Schließrichtung weist, vorbelastet.

In dem in Figur 1 gezeigten Zustand ist der Ventilkörper 3 von der Struktur 4 abgehoben, was durch einen anliegenden Differenzdruck des Kurbelgehäuseentlüftungsgases geschieht, nämlich dann, wenn auf der mit dem Kurbelgehäuse verbundenen, in Figur 1 unteren Seite des Strömungskanals 11 ein höherer Druck herrscht als auf der oberen, mit dem Ansaugtrakt der Brennkraftmaschine verbundenen Bereich des Strömungskanals 11. Im geöffneten Zustand des Ventilkörpers 3 strömt das Kurbelgehäuseentlüftungsgas aus dem unteren Teil des Strömungskanals 11 zunächst durch dessen einheitlichen Zuströmquerschnitt 21 und dann aufgeteilt durch die Vielzahl der Teilzuströmquerschnitte 22 in Richtung zur Prallfläche 30 an der Unterseite des Ventilkörpers 3. In dem Durchlass 20 zwischen der Oberseite der Struktur 4 und der Prallfläche 30 erfahren die durch die Teilzuströmquerschnitte 22 strömenden Gasteilströme jeweils eine sehr scharfe Strömungsumlenkung, die zu einem Niederschlagen von mitgeführten Ölteilchen an der Prallfläche 30 führt. Eine zweite scharfe Strömungsumlenkung erfährt der Gasstrom auf seinem weiteren Weg, sobald er den radial äußeren Rand der Prallfläche 30 erreicht. Hier wird nämlich der Gasstrom von seiner radialen Strömungsrichtung in eine axiale Strömungsrichtung umgelenkt, wobei er einen Ringspalt 20' zwischen dem Außenumfang der Prallfläche 30 und der inneren Oberfläche einer den Strömungskanal 11 begrenzenden Umfangswand 11' durchströmt. Öltröpfchen, die nicht an der Prallfläche 30 niedergeschlagen wurden, werden nun zumindest zum Teil an der Umfangswand 11' niedergeschlagen.

Das durch die Vorrichtung 1 strömende Kurbelgehäuseentlüftungsgas wird somit innerhalb des hier durch die Struktur 4, die Prallfläche 30 und die Umfangswand 11' gebildeten Ölabscheiders 2 von mitgeführten Ölteilchen wirkungsvoll befreit.

Das vom Ölteilchen befreite Kurbelgehäuseentlüftungsgas strömt gemäß den eingezeichneten Pfeilen nach oben und gelangt durch den weiteren Strömungskanal 11 zum Ansaugtrakt der Brennkraftmaschine.

Das an der Prallfläche 30 niedergeschlagene Öl wird unter der Wirkung der Gasströmung entlang der Prallfläche 30 radial nach außen transportiert und tropft vom radial äußeren Rand der Prallfläche 30 bzw. des Ventilkörpers 3 unter Schwerkraftwirkung nach unten ab. Dadurch gelangt das abgetropfte Öl in einen innerhalb des Strömungskanals 11 radial außen von der Struktur 4 ausgebildeten Ableitbereich 24, der hier die Form einer nach oben hin offenen, eingetieften umlaufenden Rinne hat. In denselben Ableitbereich 24 fließt unter Schwerkraftwirkung auch das an der Umfangswand 11' radial außen von der Prallfläche 30 niedergeschlagene Öl.

An der in Figur 1 rechten Seite der Vorrichtung 1 ist der Ableitbereich 24 über eine Strömungsverbindung 26 in Form einer Bohrung mit einer außerhalb des Strömungskanals 11 angeordneten Ölsammelkammer 25 verbunden. In dieser Ölsammelkammer 25 kann ein vorgebbares Volumen an abgeschiedenem Öl gesammelt und vorübergehend aufbewahrt werden. Über einen nur ansatzweise dargestellten Ölrückführkanal 28 mit einem darin angeordneten Ventil 27 kann von Zeit zur Zeit eine selbsttätige Entleerung der Ölsammelkammer 25 erfolgen, wobei zweckmäßig der Ölrückführkanal 28, der hier nur zu einem geringen Teil dargestellt ist, in seinem weiteren Verlauf zum Kurbelgehäuse der zugehörigen Brennkraftmaschine führt. Das Ventil 27 ist in dem dargestellten Beispiel ein Blattventil, das selbsttätig in Abhängigkeit von einer beiderseits des Ventils 27 anliegenden Druckdifferenz öffnet oder schließt. Insbesondere öffnet diese Ventil 27 bei Stillstand der zugehörigen Brennkraftmaschine, so dass dann unter Schwerkraftwirkung das Öl aus der Ölsammelkammer 25 zum Kurbelgehäuse zurückfließen kann.

Die Figuren 2 bis 6 der Zeichnung zeigen unterschiedliche Ausführungen der Struktur 4, die für die Aufteilung des zunächst einheitlichen Zuströmquerschnitts 21 in die Vielzahl der jeweils kleineren Teilzuströmquerschnitte 22 sorgt, wobei die Figur 4 eine Struktur zeigt, die nicht eine Ausführungsform der Erfindung ist.

In Figur 2 ist eine Ausführung der Struktur 4 gezeigt, bei der die Teilzuströmquerschnitte 22 durch in einem regelmäßigen Raster angeordnete quadratische Kanäle 41 gebildet sind.

Bei dem Beispiel gemäß Figur 3 sind die Teilzuströmquerschnitte 22 durch im Querschnitt rautenförmige Kanäle 41 gebildet, die ebenfalls ein regelmäßiges, gitterartiges Raster bilden.

Figur 4 zeigt ein Beispiel der Struktur 4, bei der die Teilzuströmquerschnitte 22 durch eine Anzahl von runden Kanälen 42, z.B. Bohrungen, gebildet sind. Diese Struktur gemäß Figur 4 ist nicht eine Ausführungsform der Erfindung, sondern entspricht dem Stand der Technik und ist zur Erleichterung des Verständnisses der Erfindung dargestellt.

Bei dem Beispiel gemäß Figur 5 besitzt die Struktur 4 zur Bildung der Teilzuströmquerschnitte 22 mehrere konzentrische Bereiche von ringabschnittförmigen Kanälen 43. Diese ringabschnittförmigen Kanäle 43 erstrecken sich dabei jeweils über annähernd ein Drittel des Umfangs der Struktur 4 und sind auf unterschiedlichen konzentrischen Radien angeordnet.

Die Struktur 4 gemäß Figur 6 besitzt ebenfalls ringabschnittförmige Kanäle 43 zur Bildung der Teilzuströmquerschnitte 22, wobei hier aber in Umfangsrichtung die Kanäle 43 im Vergleich zu dem Beispiel gemäß Figur 5 kürzer sind und sich jeweils nur über einen kleineren Umfangswinkelbereich erstrecken.

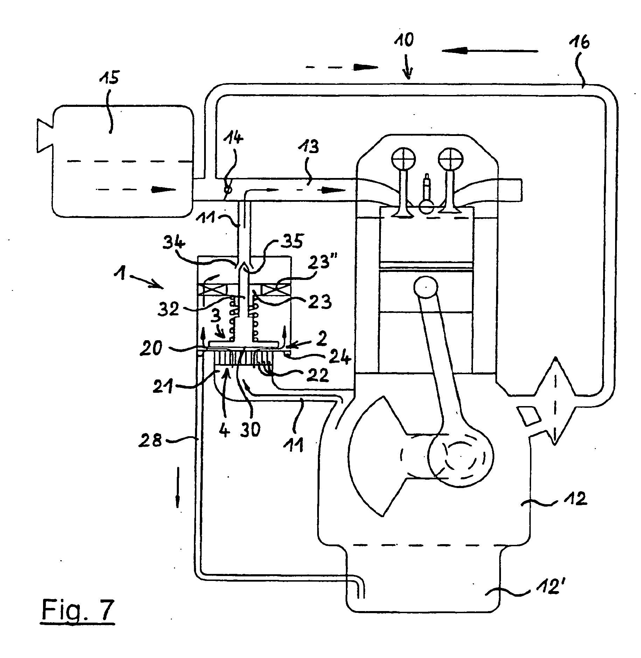

Figur 7 zeigt in einer schematischen Darstellung eine mit der Vorrichtung 1 ausgestattete Brennkraftmaschine 10. Die Vorrichtung 1 ist über einen ersten Abschnitt des Strömungskanals 11 mit dem Kurbelgehäuse 12 der Brennkraftmaschine 10 verbunden. Zuströmseitig ist in der Vorrichtung 1 die Struktur 4 zur Aufteilung des Zuströmquerschnitts 21 in die Vielzahl von Teilzuströmquerschnitten 22 angeordnet. Oberhalb der Struktur 4 liegt der Ventilkörper 3, dessen unterseitige Prallfläche 30 zusammen mit der Oberseite der Struktur 4 den Durchlass 20 des Ölabscheiders 2 bildet. Radial außen von der Struktur 4 und dem Ventilkörper 3 verläuft in der Vorrichtung der Ableitbereich 24, der auch hier die Form einer nach oben offenen Rinne hat. Über den Ölrückführkanal 28 ist der Ableitbereich 24 mit dem unteren Teil des Kurbelgehäuses 12, hier der Ölwanne 12', der Brennkraftmaschine 10 verbunden, um an der Prallfläche 30 des Ventilkörpers 3 infolge der Umlenkung im Bereich des Durchlasses 20 abgeschiedenes Öl zurückzuführen.

Auch bei der Vorrichtung 1 gemäß Figur 7 besitzt der Ventilkörper 3 in seinem oberen Teil einen Führungsabschnitt 32, der in dem Führungskörper 23 geführt ist. Der zur Führung des Ventilkörpers 3 dienende Körper 23 ist auch hier über mehrere in Umfangsrichtung verteilte, radial verlaufende Wippen 23" innerhalb der Vorrichtung 1 zentriert gehalten.

Abweichend von dem Beispiel gemäß Figur 1 besitzt hier der Ventilkörper 3 am oberen Ende seines Führungsabschnitts einen konischen Endabschnitt 35, der mit einem konischen Durchlassquerschnitt 34, der am Anfang des oberen Teils des Strömungskanals 11 ausgebildet ist, zusammenwirkt. Dabei ist das Zusammenwirken an dieser Stelle gegensinnig zu dem Zusammenwirken des Ventilkörpers 3 mit der Struktur 4. Dies bedeutet, dass bei einem Anheben des Ventilkörpers 3 von der Struktur 4 weg aufgrund einer entsprechenden Druckdifferenz in den beiden Teilen des Strömungskanals 11 gleichzeitig der zweite Durchlassquerschnitt 34 durch den konischen Endabschnitt 35 verkleinert wird. In dieser Ausführung bildet die Vorrichtung 1 neben dem Ölabscheider 2 ein Stromregelventil, das die maximale Größe des Volumenstroms an Kurbelgehäuseentlüftungsgas, das aus dem Kurbelgehäuse 12 in den Ansaugtrakt 13 der Brennkraftmaschine 10 gelangen kann, begrenzt.

Gleichzeitig ermöglicht diese zusätzliche Funktion der Vorrichtung 1 als Stromregelventil eine wirksame, jedoch auf betrieblich sinnvolle Mengen begrenzte Belüftung des Kurbelgehäuses 12 mit Frischluft durch eine oben und rechts in Figur 7 verlaufende Kurbelgehäusebelüftungsleitung 16. Hierzu wird über einen Luftfilter 15 gereinigte Frischluft vor einer Drosselklappe 14 im Ansaugtrakt 13 abgezweigt und durch die Leitung 16 in das Kurbelgehäuse 12 geführt. Damit dient die Vorrichtung 1 in dem Beispiel gemäß Figur 7 als Ölabscheider 2 sowie gleichzeitig als Druckregelventil für die Kurbelgehäuseentlüftung und als Stromregelventil für die Kurbelgehäusebelüftung. Dabei erfordert die Vorrichtung 1 vorteilhaft als bewegliches Element nur den axial verschieblichen Ventilkörper 3.

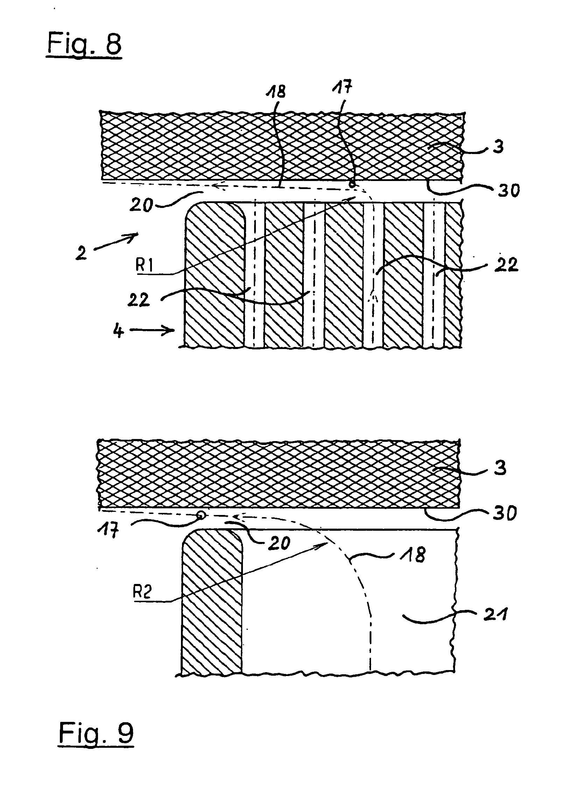

Figur 8 zeigt in einer vergrößerten Ausschnittdarstellung unten einen Teil der Struktur 4 und oben einen Teil des Ventilkörpers 3, jeweils im Längsschnitt. In der Struktur 4 sind die Teilzuströmquerschnitte 22 ausgebildet, die parallel zueinander und senkrecht zu der an der Unterseite des Ventilkörpers 3 ausgebildeten Prallfläche 30 verlaufen. Durch eine gestrichelte Linie 18 ist ein Strompfad veranschaulicht, über den einer der Gasteilströme fließt. Der Strompfad 18 verläuft zunächst durch einen der Teilzuströmquerschnitte 22 und aufgrund von dessen relativ kleinem Querschnitt zwangsläufig in Längsrichtung dieses Teilzuströmquerschnitts 22. Erst nach dem Austreten des Gasteilstroms aus dem Teilzuströmquerschnitt 22 wird der Strompfad 18 im Durchlass 20 sehr scharf, hier mit einem kleinen Radius R1 um annähernd 90°, innerhalb einer kurzen axialen Strecke in Radialrichtung nach außen umgelenkt. Dies führt zur Einwirkung von hohen Zentrifugalkräften auf Ölteilchen, von denen eines mit der Ziffer 17 dargestellt ist. Durch die hohe Zentrifugalkraft und durch die Massenträgheit der Ölteilchen 17 können diese der scharfen Strömungsumlenkung im Durchlass 20 nicht folgen, sondern prallen auf die Prallfläche 30 und werden so aus dem Gasstrom abgeschieden. Dieser vorstehend beschriebene Abscheideeffekt ergibt sich in identischer Weise für jeden einzelnen Teilzuströmquerschnitt 22.

Die Figur 9 zeigt einen Ausschnitt aus einer dem Stand der Technik entsprechenden Vorrichtung in einer mit der Figur 8 übereinstimmenden Darstellung. Bei der Vorrichtung nach dem Stand der Technik liegt ein einheitlicher Zuströmquerschnitt 21 bis in den Bereich der Prallfläche 30 des Ventilkörpers 3 vor, wodurch sich für den Gasstrom des Kurbelgehäuseentlüftungsgases die Möglichkeit ergibt, im Bereich des Durchlasses 20 und schon vor diesem einen Strömungspfad 18 mit einer relativ schwachen Ablenkung und entsprechend einem relativ großen Radius R2 zurückzulegen. Aufgrund des großen Radius R2 wirken hier nur relativ schwache Zentrifugalkräfte auf die Ölteilchen 17, so dass diese dem Strompfad 18 des Gases zum großen Teil folgen können und sich nicht, wie dies an sich gewünscht wäre, an der Prallfläche 30 niederschlagen. Insbesondere gilt das für relativ kleine Ölteilchen 17, die dann aus dem Gasstrom nicht abgeschieden oder zumindest nicht in ausreichendem Umfang abgeschieden werden.

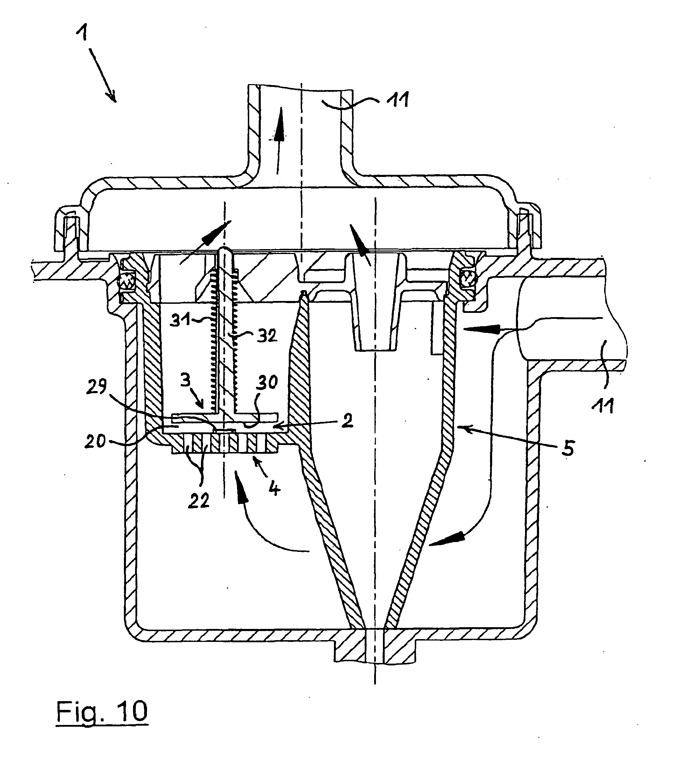

Die Figur 10 zeigt ein weiteres Ausführungsbeispiel der Vorrichtung 1, wieder im Längsschnitt. Auch hier ist die Vorrichtung 1 in den Verlauf eines Strömungskanals 11 für die Kurbelgehäuseentlüftung einer hier nicht dargestellten Brennkraftmaschine eingefügt. Die Vorrichtung 1 umfasst dabei den Ölabscheider 2, der durch die Struktur 4 mit den Teilzuströmquerschnitten 22 und durch die Prallfläche 30 des Ventilkörpers 3 gebildet ist, wobei die Prallfläche 30 und die Oberseite der Struktur 4 auch hier einen Durchlass 20 mit einer scharfen Umlenkung für die Gasteilströme bilden.

Auf der Oberseite der Struktur 4 ist hier ein Schließanschlag 29 für den Ventilkörper 3 vorgesehen, z.B. einstückig als Ringwulst angeformt. Der Schließanschlag 29 sorgt, dass in Schließstellung des Ventilkörpers 3 dieser einen kleinen Abstand von der Hauptfläche der Oberseite der Struktur 4 behält. Damit wird ein störendes Anfrieren und Ankleben des Ventilkörpers 3 vermieden. Zugleich bleibt auch bei sehr niedrigem Druck des Kurbelgehäuseentlüftungsgases ein kleiner Strömungsquerschnitt durch den Durchlass 20, verbunden mit einer erwünschten Ölabscheidung, frei.

An seiner von der Struktur 4 abgewandten Seite besitzt der Ventilkörper 3 auch hier einen Führungsabschnitt 32 zur axialen Führung. Um den Abschnitt 32 herum ist eine Schraubfeder 31 angeordnet, die den Ventilkörper 3 mit einer Kraft in Schließrichtung, also in Richtung zur Oberseite der Struktur 4, beaufschlagt.

Zusätzlich umfasst die Vorrichtung 1 gemäß Figur 10 einen weiteren Ölabscheider 5, der hier in Form eines an sich bekannten Zyklons ausgebildet ist und der parallel zum Ölabscheider 2 geschaltet ist. Je nach Betriebszustand der zugehörigen Brennkraftmaschine wird bei geringen und mittleren Mengen an Kurbelgehäuseentlüftungsgas zunächst nur der Zyklon 5 durchströmt. Bei größeren Mengen an Kurbelgehäuseentlüftungsgas, die den Zyklon 5 hinsichtlich des möglichen Durchsatzes überfordern und zu einem Differenzdruckanstieg führen, öffnet der Ventilkörper 3 aufgrund des anliegenden Differenzdrucks selbsttätig den Durchlass 20, wodurch ein paralleler Strömungsweg für das Kurbelgehäuseentlüftungsgas freigegeben wird, auf dem ebenfalls eine wirksame Abscheidung von Ölteilchen im Bereich des durch die Struktur 4 und die Prallfläche 30 gebildeten Ölabscheiders 2 erfolgt.

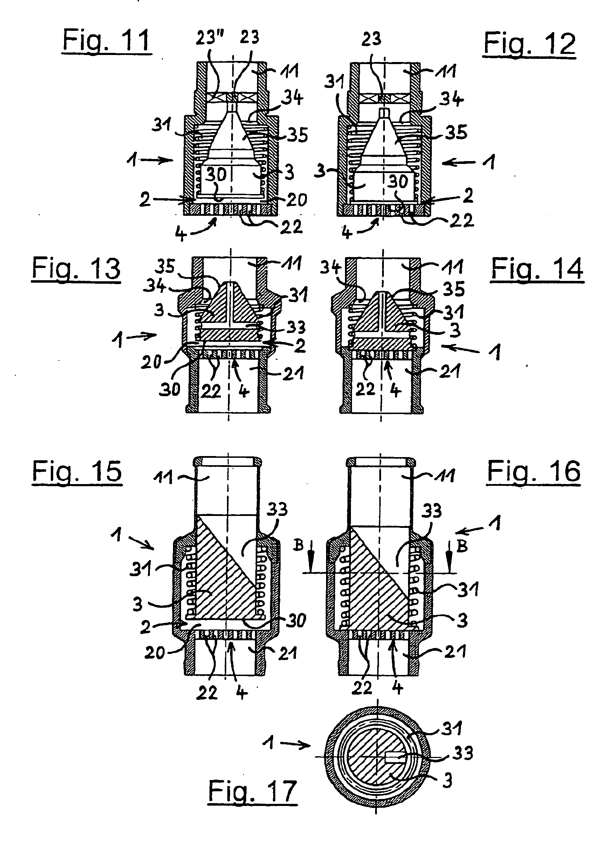

Die Figuren 11 und 12 zeigen im Längsschnitt eine weitere Ausführung der Vorrichtung 1 in zwei verschiedenen Betriebszuständen. Die Vorrichtung 1 gemäß den Figuren 11 und 12 umfasst ebenfalls die Struktur 4, über der stromabwärts der Ventilkörper 3 mit seiner unterseitigen Prallfläche 30 angeordnet ist. Auch hier ist der Ventilkörper 3 über eine Feder 31 in Schließrichtung, d.h. hier in Richtung zur Struktur 4, vorbelastet.

Stromab des Ventilkörpers 3, hier also über diesem, ist mittels mehrerer Rippen 23" wieder ein Körper 23 im Strömungskanal 11 gehaltert, der die axiale Bewegbarkeit des Ventilkörpers 3 begrenzt.

In seinem oberen Teil ist der Ventilkörper 3 hier mit einem konischen Abschnitt 35 ausgebildet, der mit einem im Strömungskanal 11 ausgebildeten zweiten Durchlassquerschnitt 34 zusammenwirkt.

In Figur 11 ist der Ventilkörper 3 von der Oberseite der Struktur 4 abgehoben, also hinsichtlich des Durchlasses 20 geöffnet. In dieser Stellung liegt der Ventilkörper 3 an dem Körper 23 an. Durch diese in Richtung nach oben maximale Verschiebung des Ventilkörpers 3 liegt der konische Abschnitt 35 soweit wie möglich innerhalb des Durchlassquerschnitts 34, wodurch dieser nun seinen minimalen Strömungsquerschnitt hat.

In Figur 12 befindet sich der Ventilkörper 3 in seiner Schließstellung, in der er mit seiner Prallfläche 30 an der Oberseite der Struktur 4 mit den Teilzuströmquerschnitten 22 liegt und diese verschließt.

Durch diese so weit wie möglich nach unten verschobene Position liegt nun der konische Abschnitt 35 des Ventilköpers 3 so wenig wie möglich innerhalb des Durchlassquerschnitts 34, wodurch dieser nun seinen maximalen freien Strömungsquerschnitt hat. Auf diese Weise erhält die Vorrichtung 1 auch bei dem Beispiel gemäß Figur 11 und 12 neben der Funktion als Ölabscheider 2 noch die Funktion eines Druckbegrenzungsventils über das Zusammenwirken der Prallfläche 30 mit der Struktur 4 und eines Stromregelventils durch das Zusammenwirken des konischen Abschnitts 35 mit dem Durchlassquerschnitt 34, wobei das Druckbegrenzungsventil und das Stromregelventil gegensinnig zueinander wirken.

In diesem Zusammenhang sei darauf hingewiesen, dass die Strömungsquerschnitte in den in der Zeichnung dargestellten Beispielen aus Gründen der Erkennbarkeit unmaßstäblich sind und in der Praxis in der Regel wesentlich kleiner ausgebildet sind.

In den Figuren 13 und 14 ist in gleicher Darstellungsweise wie in den Figuren 11 und 12 eine weitere Ausführung der Vorrichtung 1, wieder in zwei Betriebszuständen, gezeigt. Im Unterschied zum Beispiel nach den Figuren 11 und 12 ist bei dem Beispiel nach den Figuren 13 und 14 kein Körper 23 als Anschlag vorgesehen; vielmehr kann der Ventilkörper 3 soweit nach oben verschoben werden, bis sich sein konischer Abschnitt 35 dicht an den Durchlassquerschnitt 34 anlegt. Damit auch in diesem Zustand noch eine Gasströmung des Kurbelgehäuseentlüftungsgases durch die Vorrichtung 1 in einem vorgebbaren Mindestmaß möglich bleibt, ist in dem Ventilkörper 3 ein Gaskanal 33 vorgesehen. Dieser Gaskanal 33 verläuft hier zunächst von einer Stelle axial oberhalb der Prallfläche 30 radial vom Außenumfang nach innen und von dort in Axialrichtung nach oben. In ihren sonstigen Einzelteilen und Funktionen entspricht die Vorrichtung 1 gemäß den Figuren 13 und 14 der zuvor beschriebenen Vorrichtung 1 gemäß den Figuren 11 und 12.

Die Figuren 15 und 16 zeigen eine weitere Ausführung der Vorrichtung 1, wieder in zwei Betriebszuständen und im Längsschnitt. Zusätzlich zeigt die Figur 17 die Vorrichtung 1 im Querschnitt gemäß der in Figur 16 eingezeichneten Schnittlinie B-B.

Der Ventilkörper 3 ist hier ein in seiner Grundform zylindrischer Körper, der auch hier wieder axial verschieblich in der Vorrichtung 1 geführt ist und durch die Feder 31 in Schließrichtung, also in Richtung zur Struktur 4 vorbelastet ist. Wie aus den Figuren 15 bis 17 ersichtlich ist, ist der Ventilkörper 3 hier mit einer keilförmig verlaufenden Nut versehen, die einen Gaskanal 33 bildet. Je nach axialer Stellung des Ventilkörpers 3 relativ zur übrigen Vorrichtung 1 ist der Querschnitt des Gaskanals 33 variabel. Dabei ist auch hier die Anordnung so getroffen, dass bei zunehmendem Strömungsquerschnitt des Durchlasses 20 im Bereich des Ölabscheiders 2 sich der Strömungsquerschnitt des Gaskanals 33 verkleinert und umgekehrt. Dadurch wird auch bei der Vorrichtung 1 gemäß den Figuren 15 bis 17 die Funktion des Ölabscheiders 2 mit den Funktionen eines Druckregelventils und eines Stromregelventils kombiniert.

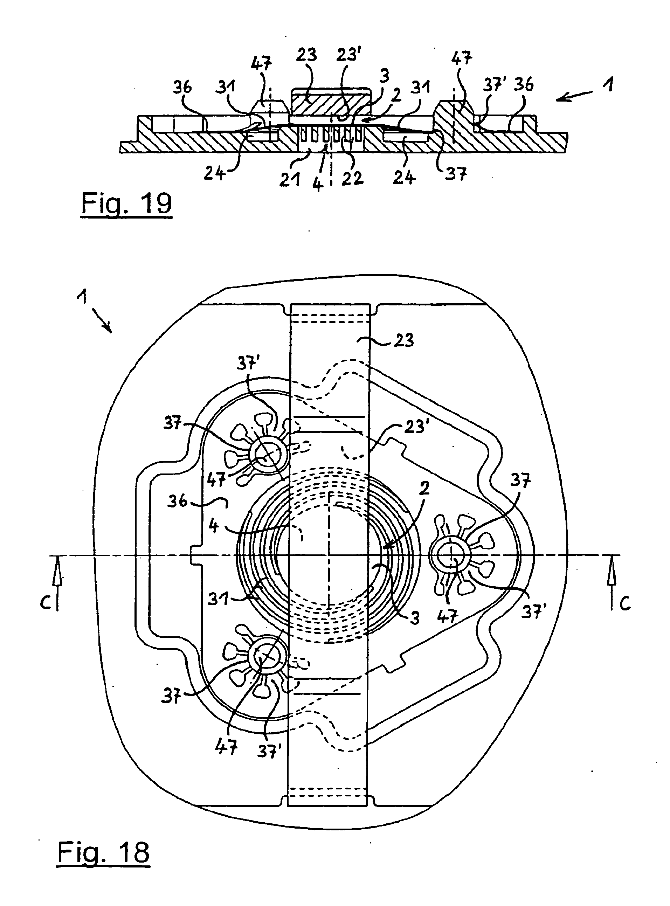

Figur 18 zeigt eine weitere Ausführung der Vorrichtung 1 in einer Teil-Draufsicht. Im Zentrum der Figur 18 liegt der runde, hier flache Ventilkörper 3, der als Blechscheibe ausgeführt ist. Der Ventilkörper 3 ist hier durch eine sogenannte Mäanderfeder 31 gehalten, die spiralförmig um den Ventilkörper 3 herum angeordnet ist. Der Ventilkörper 3, die Mäanderfeder 31 und ein diese umgebender Bereich bilden zusammen ein Federblechteil 36, das einstückig als Stanzteil hergestellt ist. Radial außen von der Mäanderfeder 31 sind hier drei Durchbrechungen 37 in dem Federblechteil 36 angebracht, wobei jede Durchbrechung 37 von einer Anzahl von Fixierzungen 37' umgeben ist.

Unterhalb des Ventilkörpers 3 und des Federblechteils 36 liegt hier unsichtbar die Struktur 4, von deren Oberseite sich deckungsgleich zu den Durchbrechungen 37 drei Fixierzapfen 47 nach oben erstrecken. Auf diese Fixierzapfen 47 ist das Federblechteil 36 mittels seiner Durchbrechungen 37 aufgesetzt, wobei durch die Fixierzungen 37' eine Bewegung des Federblechteils 36 in umgekehrter Richtung ausgeschlossen wird. Damit lässt sich das Federblechteil 36 sehr einfach mit der Struktur 4 ausreichend fest und dauerhaft verbinden.

Mittels der Mäanderfeder 31 ist der Ventilkörper 3 senkrecht zu seiner Flächenebene federnd beweglich, wodurch sich der Ventilkörper 3 in seiner Lage relativ zu der Struktur 4 verschieben kann.

Ein die Oberseite der Struktur 4 und des Ventilkörpers 3 übergreifender bügelförmiger Körper 23 bildet mit seiner Unterseite einen Öffnungsanschlag 23' für den Ventilkörper 3. Hierdurch wird der Bewegungsweg des Ventilkörpers 3 in Richtung von der Struktur 4 weg zur Unterseite des bügelförmigen Körpers 23 hin begrenzt. Der bügelförmige Körper 23 kann beispielsweise mit dem übrigen hier sichtbaren Teil der Vorrichtung 1 verrastet sein, bei dem Beispiel gemäß Figur 18 am oberen und unteren Rand durch nach unten weisende Rastzungen.

Figur 19 zeigt die Vorrichtung aus Figur 18 im Querschnitt gemäß der Schnittlinie C-C in Figur 18. Im Zentrum der Figur 19 ist unten die Struktur 4 sichtbar, die den Zuströmquerschnitt 21 in die Vielzahl von Teilzuströmquerschnitten 22 unterteilt. Oberhalb der Struktur 4 liegt der Ventilkörper 3, wobei hier dessen flache, scheibenförmige Gestaltung besonders deutlich wird. In dem in Figur 19 dargestellten Betriebszustand liegt der Ventilkörper 3 auf der Oberseite der Struktur 4 auf, befindet sich also in seiner Schließstellung.

Radial außen von dem Ventilkörper 3 liegt die den Ventilkörper 3 federnd tragende und führende Mäanderfeder 31, die zusammen mit dem Ventilkörper 3 einstückig das Federblechteil 36 bildet. Rechts in Figur 19 verläuft der Schnitt durch eine der Durchbrechungen 37 im Federblechteil 36, wobei die Durchbrechung 37 von den Fixierzungen 37' umgeben ist, die das Federblechteil 36 auf den Fixierzapfen 47 festhalten.

Mittig oben in der Figur 19 ist der bügelförmige Körper 23 im Schnitt sichtbar, der mit seiner Unterseite den Öffnungsanschlag 23' für den Ventilkörper 3 bildet.

Wenn im Zuströmquerschnitt 21 der Druck des dort anstehenden Kurbelgehäuseentlüftungsgases ansteigt, wird der Ventilkörper 3 gegen die Kraft der Mäanderfeder 31 nach oben hin verschoben, wodurch ein Durchlass zwischen der Oberseite der Struktur 4 und der Unterseite des Ventilkörpers 3 freigegeben wird. Auch bei dieser Ausführung der Vorrichtung 1 ergibt sich für die einzelnen Teilströme des Kurbelgehäuseentlüftungsgases, die durch die Teilzuströmquerschnitte 22 strömen, eine sehr scharfe Strömungsumlenkung, die zu einer Prallabscheidung von Ölteilchen an der Unterseite des Ventilkörpers 3 führt. Das durch die Prallabscheidung abgeschiedene Öl kann dann radial nach außen abfließen und wird in Ableitbereichen 24 gesammelt. Von dort kann das gesammelte Öl über hier nicht sichtbare Strömungswege zur Ölwanne der zugehörigen Brennkraftmaschine zurückgeführt werden.

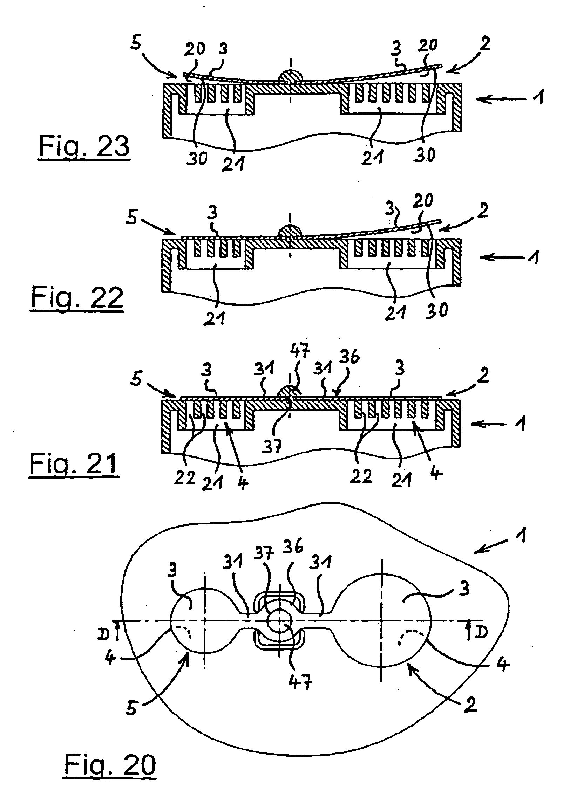

Figur 20 zeigt eine weitere, letzte Ausführung der Vorrichtung 1, wieder in einer Teil-Draufsicht. In dieser Ausführung besitzt die Vorrichtung 1 zwei Ölabscheider 2 und 5, die sich in ihrer Größe unterscheiden.

Der in Figur 20 rechts sichtbare erste Ölabscheider 2 ist in seinem Durchmesser größer und der in Figur 20 links sichtbare zweite Ölabscheider 5 ist in seinem Durchmesser im Verhältnis dazu kleiner ausgeführt. Jeder Ölabscheider 2 und 5 besitzt je einen flachen Ventilkörper 3, der als Blattventil ausgeführt ist. Die beiden Ventilkörper 3 stehen über jeweils einen schmalen, eine Feder 31 bildenden Abschnitt miteinander einstückig in Verbindung und bilden so ein einheitliches Federblechteil 36. Zwischen den beiden Ventilkörpern 3 ist im Federblechteil 36 eine Durchbrechung 37 angebracht, die auf einem Fixierzapfen 47 festgelegt ist. Unterhalb der Ventilkörper 3 liegt verdeckt und deshalb unsichtbar jeweils eine Struktur 4, die den jeweiligen Zuströmquerschnitt in eine Anzahl von Teilzuströmquerschnitten unterteilt.

Die Figuren 21 bis 23 zeigen die Vorrichtung 1 aus Figur 20 im Querschnitt gemäß der Linie D-D in Figur 20, in drei verschiedenen Betriebszuständen.

In allen drei Figuren 21 bis 23 ist jeweils rechts der erste Ölabscheider 2 und links der weitere, zweite Ölabscheider 5 sichtbar. Auch die unterschiedlichen Querschnitte der beiden Ölabscheider 2 und 5 werden hier deutlich, ebenso wie die Aufteilung des jeweiligen Zuströmquerschnitts 21 in jeweils eine Anzahl von Teilzuströmquerschnitten 21 mittels der jeweils zugehörigen Struktur 4.

Oberhalb der Strukturen 4 liegen jeweils die Ventilkörper 3, die Teile des Federblechteils 36 sind.

In Figur 21 liegen beide Ventilkörper 3 an der Oberseite der jeweils zugehörigen Struktur 4 an und befinden sich also in Schließstellung, die sich bei fehlendem oder sehr niedrigem Druck des Kurbelgehäuseentlüftungsgases einstellt.

In Figur 22 liegt ein gegenüber Figur 21 erhöhter Druck des Kurbelgehäuseentlüftungsgases vor, was dazu führt, dass zunächst der in Figur 22 rechte Ventilkörper 3 aus seiner Schließstellung in seine nach oben verschwenkte Öffnungsstellung bewegt wird. Hierdurch wird in dem in Figur 22 rechten Ölabscheider 2 ein Durchlass 20 freigegeben, der mittels der hier erfolgenden scharfen Strömungsumlenkung zu einer Prallabscheidung von Öltröpfchen aus dem Kurbelgehäuseentlüftungsgas an der Unterseite des Ventilkörpers 3 führt.

Bei weiter ansteigendem Druck des Kurbelgehäuseentlüftungsgases wird, wie Figur 23 zeigt, auch der zweite Ölabscheider 5 geöffnet, indem der gemäß Figur 23 linke Ventilkörper 3 nun durch den noch höheren Gasdruck ebenfalls aus seiner Schließstellung in eine Öffnungsstellung verschwenkt wird. Auch hier ergibt sich durch Prallabscheidung eine Öltröpfchenabscheidung aus dem Kurbelgehäuseentlüftungsgas an der Unterseite des zugehörigen Ventilkörpers 3.

Wie die Figuren 20 bis 23 verdeutlichen, haben die beiden Federn 31, die durch Abschnitte des Federblechteils 36 gebildet sind, unterschiedliche Längen, woraus sich entsprechend unterschiedliche Federkonstanten ergeben. Dies führt in Verbindung mit den unterschiedlich großen druckbeaufschlagten Flächen der beiden Ventilkörper 3 dazu, dass jeder Ventilkörper 3 einen eigenen Öffnungsdruck hat, bei dem er von der Oberseite der Struktur 4 abgehoben wird. Auf diese Weise kann eine Art von Registerschaltung der beiden Ölabscheider 2 und 5 erzielt werden, die selbsttätig durch den Druck des Kurbelgehäuseentlüftungsgases und damit abhängig von der Menge des Kurbelgehäuseentlüftungsgases gesteuert wird. Es können hier auch mehr als zwei Ölabscheider vorgesehen werden.

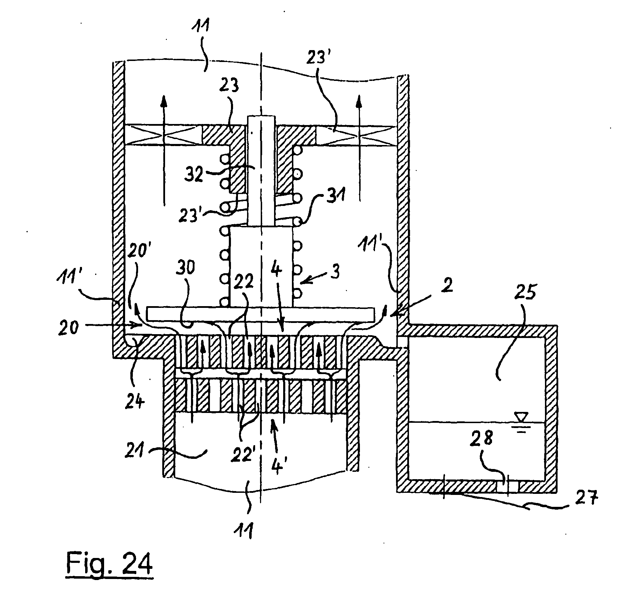

Figur 24 zeigt ein Ausführungsbeispiel der Vorrichtung, für das charakteristisch ist, dass im Zuströmquerschnitt 21 zwei diesen in die mehreren Teilzuströmquerschnitte 22, 22' aufteilende, untereinander axial beabstandete Strukturen 4 und 4' angeordnet sind. Dabei weisen die Teilzuströmquerschnitte 22 der einen, hier oberen Struktur 4 relativ zu den Teilzuströmquerschnitten 22' der anderen hier unteren Struktur 4' einen Versatz quer zur Längsrichtung der Teilzuströmquerschnitte 22, 22' auf. Hiermit ergibt sich, wie durch Strömungspfeile im Bereich der Strukturen 4 und 4' angedeutet ist, bereits im Bereich zwischen den Strukturen 4 und 4' eine scharfe Strömungsumlenkung der Teilströme, wodurch bereits eine erste Ölnebelabscheidung im Bereich zwischen der unteren Struktur 4' und der oberen Struktur 4 erfolgt.

Das hier abgeschiedene Öl kann dann entweder unter Schwerkraftwirkung nach unten gegen den Gasstrom abfließen und auf einen hier nicht gezeigten Weg in das Kurbelgehäuse der zugehörigen Brennkraftmaschine zurückgeführt werden oder durch die Gasströmung nach oben hin mitgenommen und dann endgültig an der Prallfläche 30 oder an der inneren Oberfläche der Umfangswand 11' des Gaskanals 11 abgeschieden werden. Diese Abscheidung wird durch die beiden Strukturen 4 und 4' erleichtert, weil diese zur Bildung von größeren Öltröpfchen aus dem zuvor vorliegenden kleineren Öltröpfchen im Gasstrom beitragen.

Zumindest eine der beiden Strukturen 4 oder 4' ist zweckmäßig einstückig mit der übrigen Vorrichtung 1 hergestellt, wobei diese beispielsweise aus einem thermoplastischen Kunststoff im Spritzguss gefertigt sein kann. Die andere, hier untere Struktur 4' kann als zunächst separates Element in den Gaskanal 11 von unten her eingeführt und dann in der passenden Position fixiert sein, z.B. durch Verrastung oder Verschweißung.

Bei dem Beispiel der Vorrichtung 1 gemäß der Figur 24 werden also an drei verschiedenen Stellen Strömungsumlenkungen erzeugt, die jeweils mit einer Ölnebelabscheidung verbunden sind:
Die erste Umlenkung findet zwischen den beiden Strukturen 4' und 4 statt, die zweite Umlenkung erfolgt zwischen der oberen Struktur 4 und der Unterseite der Prallfläche 30 und die dritte Strömungsumlenkung schließlich erfolgt zwischen dem radial äußeren Rand der Prallfläche 30 und dem Innenumfang der Umfangswand 11' im Bereich des Ringspaltes 20', der einen Teil des Durchlasses 20 der Vorrichtung 1 darstellt.

In ihren übrigen Teilen und Funktionen entspricht die Vorrichtung 1 dem Ausführungsbeispiel nach der Figur 1 und es wird auf die Beschreibung der Figur 1 hinsichtlich der weiteren in Figur 24 verwendeten Bezugsziffern verwiesen.

## Patentansprüche

1. Vorrichtung (1) zum Abscheiden von Ölteilchen (17) aus dem Kurbelgehäuseentlüftungsgas einer Brennkraftmaschine (10), wobei die Vorrichtung (1) in einem Strömungskanal (11) des Kurbelgehäuseentlüftungsgases vom Kurbelgehäuse (12) zu einem Ansaugtrakt (13) der Brennkraftmaschine (10) angeordnet ist und wobei die Vorrichtung (1) einen Ölabscheider (2) in Form eines Durchlasses (20) für das Kurbelgehäuseentlüfturigsgas mit einer Strömungsumlenkung aufweist, wodurch Ölteilchen (17) an einer Prallfläche (30) niederschlagbar und so aus dem Strom des Kurbelgehäuseentlüftungsgases abscheidbar sind, wobei ein in Strömungsrichtung des Kurbelgehäuseentlüftungsgases gesehen vor der Prallfläche (30) liegender Zuströmquerschnitt (21) in mehrere Teilzuströmquerschnitte (22, 22') aufgeteilt ist und wobei die Prallfläche (30) eine geschlossene, durchbrechungsfreie Fläche ist,
**dadurch gekennzeichnet,**
**dass** die Prallfläche (30) an einem in Strömungsrichtung des Kurbelgehäuseentlüftungsgases gesehen hinter den Teilzuströmquerschnitten (22, 22') liegenden, in Schließrichtung mit einer Kraft vorbelasteten Ventilkörper (3) ausgebildet ist, der durch den Differenzdruck zwischen dem Kurbelgehäuse (12) und dem Ansaugtrakt (13) gegen die Vorbelastungskraft mittels des Kurbelgehäuseentlüftungsgases In Öffnungsrichtung verstellbar ist, wobei die Teilzuströmquerschnitte (22, 22') durch eine gitterartige Struktur (4, 4') mit einer Anordnung von im Querschnitt mehreckigen Kanälen (41), die die Teilzuströmquerschnitte (22, 22') darstellen, oder durch eine lachplattenartige Struktur (4, 4') mit einer Anordnung von im Querschnitt ringabschnittförmigen, konzentrischen Kanälen (43), die die Teilzuströmquerschnitte (22, 22') darstellen, gebildet sind.

2. Vorrichtung nach Anspruch 1, **dadurch gekennzeichnet, dass** die Teilzuströmquerschnitte (22, 22') parallel zueinander verlaufen.

3. Vorrichtung nach Anspruch 1 oder 2, **dadurch gekennzeichnet, dass** die Teilzuströmquerschnitte (22, 22') jeweils rechtwinklig zu der Prallfläche (30) verlaufen.

4. Vorrichtung nach einem der Ansprüche 1 bis 3, **dadurch gekennzeichnet, dass** die Teilzuströmquerschnitte (22, 22') jeweils die Form eines länglichen Kanals haben.

5. Vorrichtung nach einem der vorangehenden Ansprüche, **dadurch gekennzeichnet, dass** die Prallfläche (30) radial außen unter Ausbildung eines einen Teil des Durchlasses (20) bildenden Ringspalts (20') von einer Umfangswand (11') des Strömungskanals (11) umgeben ist.

6. Vorrichtung nach einem der vorangehenden Ansprüche, **dadurch gekennzeichnet, dass** bei fehlendem Differenzdruck zwischen dem Kurbelgehäuse (12) und dem Ansaugtrakt (13) die Teilzuströmquerschnitte (22, 22') durch den Ventilkörper (3) weitgehend gasdicht verschließbar sind.

7. Vorrichtung nach einem der vorangehenden Ansprüche, **dadurch gekennzeichnet, dass** die Kraft, welche den Ventilkörper (3) in Schließrichtung vorbelastet, die Kraft mindestens einer Feder (31) ist.

8. Vorrichtung nach einem der vorangehenden Ansprüche, **dadurch gekennzeichnet, dass** bei in Einsatzstellung befindlicher Vorrichtung (1) die Strömungsrichtung in den Teilzuströmquerschnitten (22, 22') im wesentlichen von unten nach oben verläuft.

9. Vorrichtung nach Anspruch 8, **dadurch gekennzeichnet, dass** radial außen von der Prallfläche (30) und unterhalb von dieser ein eingetiefter Ableitbereich (24) für an der Prallfläche (30) niedergeschlagenes, von dieser abtropfendes oder abfließendes Öl ausgebildet ist.

10. Vorrichtung nach Anspruch 9, **dadurch gekennzeichnet, dass** der Ableitbereich (24) die Form einer nach oben offenen, umlaufenden Rinne hat.

11. Vorrichtung nach Anspruch 9 oder 10, **dadurch gekennzeichnet, dass** der Ableitbereich (24) mit einer außerhalb des von dem Kurbelgehäuseentlüftungsgas durchströmten Teils der Vorrichtung (1) liegenden Ölsammelkammer (25) verbunden ist.

12. Vorrichtung nach Anspruch 11, **dadurch gekennzeichnet, dass** die Ölsammelkammer (25) über ein Ventil (27) und einen Ölrückführkanal (28) mit dem Kurbelgehäuse (12) der Brennkraftmaschine (10) verbunden ist.

13. Vorrichtung nach Anspruch 12, **dadurch gekennzeichnet, dass** das Ventil (27) ein differenzdruckgesteuertes Ventil ist, das bei einem mit dem Druck im Ansaugtrakt (13) übereinstimmenden oder darunter liegenden Druck im Kurbelgehäuse (12) selbsttätige öffnet.

14. Vorrichtung nach einem der Ansprüche 1 bis 13, **dadurch gekennzeichnet, dass** der Ölabscheider (2) in Form des Durchlasses (20) mit Strömungsumlenkung und mit dem in mehrere Teilzuströmquerschnitte (22, 22') aufgeteilten Zuströmquerschnitt (21) der einzige der Brennkraftmaschine (10) zugeordnete Ölabscheider (2) für das Kurbelgehäuseentlüftungsgas ist.

15. Vorrichtung nach einem der Ansprüche 1 bis 13, **dadurch gekennzeichnet, dass** zu dem Ölabscheider (2) in Form des Durchlasses (20) mit Strömungsumlenkung und mit dem in mehrere Teilzuströmquerschnitte (22, 22') aufgeteilten Zuströmquerschnitt (21) mindestens ein weiterer Ölabscheider (5) für das Kurbelgehäuseentlüftungsgas parallel oder in Reihe geschaltet ist.

16. Vorrichtung nach Anspruch 15, **dadurch gekennzeichnet, dass** der mindestens eine weitere Ölabscheider (5) für das Kurbelgehäuseentlüftungsgas ein zu dem Ölabscheider (2) in Form des Durchlasses (20) mit Strömungsumlenkung und mit dem in mehrere Teilzuströmquerschnitte (22, 22') aufgeteilten Zuströmquerschnitt (21) unterschiedliches Funktionsprinzip aufweist.

17. Vorrichtung nach Anspruch 15 oder 16, **dadurch gekennzeichnet, dass** die zwei oder mehr Ölabscheider (2, 5) jeweils einen unterschiedlichen Öffnungsdruck des Kurbelgehäuseentlüftungsgases, ab dem der betreffende Ölabscheider (2; 5) durchströmt wird, aufweisen.

18. Vorrichtung nach einem der Ansprüche 15 bis 17, **dadurch gekennzeichnet, dass** die zwei oder mehr Ölabscheider (2, 5) in einer Einheit baulich und räumlich zusammengefasst sind.

19. Vorrichtung nach einem der Ansprüche 15 bis 18, **dadurch gekennzeichnet, dass** der mindestens eine weitere Ölabscheider (5) ein Fliehkraft- oder Koaleszerabscheider ist.

20. Vorrichtung nach einem der Ansprüche 1 bis 19, **dadurch gekennzeichnet, dass** im Zuströmquerschnitt (21) eine diesen in die mehreren Teilzuströmquerschnitte (22, 22') aufteilende, einzelne Struktur (4) angeordnet ist.

21. Vorrichtung nach einem der Ansprüche 1 bis 19, **dadurch gekennzeichnet, dass** im Zuströmquerschnitt (21) wenigstens zwei diesen in die mehreren Teilzuströmquerschnitte (22, 22') aufteilende, untereinander axial beabstandete Strukturen (4, 4') angeordnet sind, wobei die Teilzuströmquerschnitte (22) der einen Struktur (4) relativ zu den Teilzuströmquerschnitten (22') der anderen Struktur (4') einen Versatz quer zur Längsrichtung der Teilzuströmquerschnitte (22, 22') aufweisen.

22. Vorrichtung nach einem der Ansprüche 1 bis 21, **dadurch gekennzeichnet, dass** der Querschnitt der mehreckigen Kanäle (41) jeweils rechteckig oder quadratisch oder parallelogrammförmig oder sechseckig ist.

23. Vorrichtung nach einem der vorangehenden Ansprüche, **dadurch gekennzeichnet, dass** der Ventilkörper (3) an seiner der Prallfläche (30) abgewandten Seite einen Führungsabschnitt (32) für eine axial bewegliche Führung in dem Strömungskanal (11) aufweist.

24. Vorrichtung nach einem der vorangehenden Ansprüche, **dadurch gekennzeichnet, dass** ein Öffnungsanschlag (23') zur Begrenzung des axialen Bewegungsweges des Ventilkörpers (3) in dessen Öffnungsrichtung vorgesehen ist.

25. Vorrichtung nach einem der Ansprüche 1 bis 5 und 7 bis 24, **dadurch gekennzeichnet, dass** ein Schließenschlag (29) zur Begrenzung des axialen Bewegungsweges des Ventilkörpers (3) in dessen Schließrichtung vorgesehen ist.

26. Vorrichtung nach einem der vorangehenden Ansprüche, **dadurch gekennzeichnet, dass** der Ventilkörper (3) zur Bildung eines Stromregelventils mit einem zweiten Durchlassquerschnitt (34) In zu dem Durchlass (20), in dem die Ölabscheidung erfolgt, entgegengesetztem Sinn zusammenwirkt.

27. Vorrichtung nach Anspruch 26, **dadurch gekennzeichnet, dass** der Ventilkörper (3) abströmseitig mit einem konischen oder schrägen Abschnitt (35), der von dem zweiten Durchlassquerschnitt (34) umgeben ist, ausgeführt ist.

28. Vorrichtung nach Anspruch 26 oder 27, **dadurch gekennzeichnet, dass** der Ventilkörper (3) mit mindestens einem Gaskanal (33) ausgebildet ist, der bei den zweiten Durchlassquerschnitt (34) verschließendem Ventilkörper (3) von Kurbelgehäuseentlüftungsgas durchströmbar ist.

## Claims

1. Device (1) for eliminating oil particles (17) from the crankcase ventilation gas in an internal combustion engine (10), wherein the device (1) is located in a flow duct (11) of the crankcase ventilation gas that runs from the crankcase (12) to an induction tract (13) of the internal combustion engine (10) and wherein the device (1) comprises an oil separator (2) in the form of an outlet (20) for the crankcase ventilation gas with a deflection of the flow, causing the oil particles (17) to be deposited on a baffle surface (30) and thus to be eliminated from the crankcase ventilation gas flow, wherein an infeed cross-section (21), which lies upstream of the baffle surface (30) when viewed from the flow direction of the crankcase ventilation gas, is sub-divided into several infeed sub-sections (22, 22'), and wherein the baffle surface (30) is a solid surface that is devoid of perforations,
**characterized in that**
said baffle surface (30) is configured on a valve body (3), which lies downstream of the infeed sub-sections (22, 22') when viewed in the flow direction of the crankcase ventilation gas and which is pre-tensioned by a force in closing direction, wherein the valve body (3) can be displaced in the opening direction against the pre-tension force by the crankcase ventilation gas as a result of the differential pressure between the crankcase (12) and the induction tract (13), wherein the infeed sub-sections (22, 22') are formed by a lattice-like structure (4, 4') with an arrangement of polygonal ducts (41) in the cross-section which provide the infeed sub-sections (22, 22'), or by means of a perforated plate-like structure (4, 4') with an arrangement of annular section-shaped, concentric ducts (43) in the cross-section which produce the infeed sub-sections (22, 22').

2. Device according to Claim 1, **characterized in that** the infeed sub-sections (22, 22') run parallel to each other.

3. Device according to Claim 1 or 2, **characterized in that** the infeed sub-sections (22, 22') each run at right angles to the baffle surface (30).

4. Device according to any one of Claims 1 through 3, **characterized in that** the infeed sub-sections (22, 22') each have the form of an oblong duct or a borehole or a nozzle.

5. Device according to any one of the preceding Claims, **characterized in that** the baffle surface (30) is surrounded radially outward by a peripheral wall (11') in development of an annular gap (20') forming a part of the outlet (20).

6. Device according to any one of the preceding Claims, **characterized in that** in the case of lacking differential pressure between the crankcase (12) and the induction tract (13) the infeed sub-sections (22, 22') are sealed extensively gas-tight by the valve body (3).

7. Device according to any one of the preceding Claims, **characterized in that** the force which pre-tensions the valve body (3) in closing direction is the force of at least one spring (31).

8. Device according to any one of the preceding claims, **characterized in that** in the case of the device (1) in operation position the flow direction to the infeed sub-section (22, 22') runs in essence from the bottom to the top.

9. Device according to Claim 8, **characterized in that** an embedded deflection region (24) is constructed in the device radially outside of the baffle surface (30) and below said baffle surface for oil precipitated on the baffle surface, dripping or flowing from said baffle surface.

10. Device according to Claim 9, **characterized in that** the deflection region (24) has the form of circulating gutter open to the top.

11. Device according to Claim 9 or 10, **characterized in that** the deflection region (24) is connected to an oil collecting chamber (25) lying outside of the part of the device (1) flowed through by the crankcase ventilation gas.

12. Device according to Claim 11, **characterized in that** the oil collecting chamber (25) is connected to the crankcase (12) of the internal combustion engine (10) via a valve (27) and an oil return duct (28).

13. Device according to Claim 12, **characterized in that** the valve (27) is a differential pressure controlled valve which automatically opens in the case of a pressure in the crankcase (12) corresponding to or lying below the pressure in the induction tract (13).

14. Device according to any one of Claims 1 through 13, **characterized in that** the oil separator (2) in the form of the outlet (20) with deflection of the flow and with the infeed cross-section (21) subdivided into several infeed sub-sections (22, 22') is the only oil separator (2) assigned to the internal combustion engine (10) for the crankcase ventilation gas.

15. Device according to any one of Claims 1 through 13, **characterized in that** at least one further oil separator (5) for the crankcase ventilation gas is connected in parallel or in series to the oil separator (2) in the form of the outlet (20) with deflection of the flow and to the infeed cross-section (21) subdivided into several infeed sub-sections (22, 22').

16. Device according to Claim 15, **characterized in that** the at least one further oil separator (5) for the crankcase ventilation gas exhibits an operating principle differing from the oil separator (2) in the form of the outlet (20) with deflection of flow and with the infeed cross-section (21) subdivided into several infeed sub-sections (22, 22').

17. Device according to Claim 15 or 16, **characterized in that** the two or more oil separators (2, 5) each exhibit a different opening pressure of the crankcase ventilation gas, beginning at which the relevant oil separator (2; 5) is flowed through.

18. Device according to any one of Claims 15 through 17, **characterized in that** the two or more oil separators (2, 5) are structurally and spatially combined in one unit.

19. Device according to any one of Claims 15 through 18, **characterized in that** the at least one further oil separator (5) is a cyclone or coalescer.

20. Device according to any one of Claims 1 through 19, **characterized in that** a single structure (4) is arranged in the infeed cross-section (21) sub-dividing said infeed cross-section (21) into the several infeed sub-sections (22, 22').

21. Device according to any one of Claims 1 through 19, **characterized in that** at least two structures (4, 4') in the infeed cross-section (21) sub-dividing it into the several infeed sub-sections (22, 22'), said structures (4, 4') being spaced axially apart from one another, wherein the infeed sub-sections (22) of the one structure (4) exhibit an offset at a right angle to the longitudinal direction of the infeed sub-sections (22, 22') relative to the infeed sub-sections (22') of the other structure (4').

22. Device according to any one of Claims 1 through 21, **characterized in that** the cross-section of the polygonal ducts (41) is rectangular or square or parallelogram-shaped or hexagonal.

23. Device according to any one of the preceding Claims, **characterized in that** the valve body (3) exhibits a guide section (32) for an axially movable guidance in the flow duct (11) at its side averted from the baffle surface (30).

24. Device according to any one of the preceding Claims, **characterized in that** an opening stop (23') is provided for limitation of the axial path of movement of the valve body (3) in its opening direction.

25. Device according to any one of Claims 1 through 5 and 7 through 24, **characterized in that** a closing stop (29) is provided for the limiting of the axial path of movement of the valve body (3) in its closing direction.

26. Device according to any one of the preceding Claims, **characterized in that** for the formation of a flow control valve the valve body (3) cooperates with a second outlet cross-section (34) in an opposite direction to the outlet (20) in which the oil separation takes place.

27. Device according to Claim 26, **characterized in that** the valve body (3) at its downstream side is designed with a conical or inclined section (35), which is surrounded by the second outlet cross-section (34).

28. Device according to Claim 26 or 27, **characterized in that** the valve body (3) is constructed with at least one gas duct (33) which is permeable by crankcase ventilation gas at the valve body (3) sealing the second outlet cross-section (34).

## Revendications

1. Dispositif (1) pour séparer des particules d'huile (17) du gaz de ventilation du carter de vilebrequin d'un moteur à combustion interne (10), le dispositif (1) étant situé dans un conduit d'écoulement (11) du gaz de ventilation du carter de vilebrequin allant du carter de vilebrequin (12) à un système d'admission (13) du moteur à combustion interne (10) et le dispositif (1) comportant un séparateur d'huile (2) en forme de passage (20) pour le gaz de ventilation du carter de vilebrequin avec une déviation de l'écoulement de sorte que des particules d'huile (17) peuvent être précipitées sur une surface déflectrice (30) et peuvent ainsi être séparées du courant du gaz de ventilation du carter de vilebrequin, une section d'afflux (21) qui, vue dans le sens de l'écoulement du gaz de ventilation du carter de vilebrequin, est située en amont de la surface déflectrice (30) étant subdivisée en plusieurs sections d'afflux partiel (22, 22') et la surface déflectrice (30) étant une surface fermée et non ajourée,
**caractérisé en ce que**
la surface déflectrice (30) est réalisée sur un corps de soupape (3) précontraint par une force dans le sens de la fermeture et qui, vu dans le sens de l'écoulement du gaz de ventilation du carter de vilebrequin, est situé en aval des sections d'afflux partiel (22, 22'), lequel corps de soupape peut être déplacé dans le sens de l'ouverture à l'encontre de la force de précontrainte au moyen du gaz de ventilation du carter de vilebrequin du fait de la pression différentielle entre le carter de vilebrequin (12) et le système d'admission (13), les sections d'afflux partiel (22, 22') étant formées par une structure de type grille (4, 4') avec un agencement de conduits de section polygonale (41) qui constituent les sections d'afflux partiel (22, 22') ou par une structure de type plaque à trous (4, 4') avec un agencement de conduits concentriques (43) de section en forme de segment d'anneau qui constituent les sections d'afflux partiel (22, 22').

2. Dispositif selon la revendication 1, **caractérisé en ce que** les sections d'afflux partiel (22, 22') sont parallèles.

3. Dispositif selon la revendication 1 ou 2, **caractérisé en ce que** les sections d'afflux partiel (22, 22') sont respectivement à angle droit par rapport à la surface déflectrice (30).

4. Dispositif selon l'une des revendications 1 à 3, **caractérisé en ce que** les sections d'afflux partiel (22, 22') se présentent chacune sous la forme d'un conduit allongé ou d'un perçage ou d'une buse.

5. Dispositif selon l'une des revendications précédentes, **caractérisé en ce que** la surface déflectrice (30) est entourée radialement extérieurement par une paroi périphérique (11') du conduit d'écoulement (11) avec formation d'une fente annulaire (20') formant une partie du passage (20).

6. Dispositif selon l'une des revendications précédentes, **caractérisé en ce que**, en l'absence d'une pression différentielle entre le carter de vilebrequin (12) et le système d'admission (13), les sections d'afflux partiel (22, 22') peuvent être fermées de manière largement étanche aux gaz par le corps de sou-pape (3).

7. Dispositif selon l'une des revendications précédentes, **caractérisé en ce que** la force qui précontraint le corps de soupape (3) dans le sens de la fermeture est la force d'au moins un ressort (31).

8. Dispositif selon l'une des revendications précédentes, **caractérisé en ce que**, étant donné un dispositif (1) en position d'utilisation, le sens de l'écoulement dans les sections d'afflux partiel (22, 22') va sensiblement du bas vers le haut.

9. Dispositif selon la revendication 8, **caractérisé en ce qu'**est formée, radialement extérieurement par rapport à la surface déflectrice (30) et en dessous de celle-ci, une zone d'évacuation concave (24) pour l'huile précipitée sur la surface déflectrice (30) qui s'égoutte ou s'écoule de celle-ci.

10. Dispositif selon la revendication 9, **caractérisé en ce que** la zone d'évacuation (24) a la forme d'une gouttière périphérique ouverte vers le haut.

11. Dispositif selon la revendication 9 ou 10, **caractérisé en ce que** la zone d'évacuation (24) est reliée à une chambre collectrice d'huile (25) située en dehors de la partie du dispositif (1) qui est traversée par le gaz de ventilation du carter de vilebrequin.

12. Dispositif selon la revendication 11, **caractérisé en ce que** la chambre collectrice d'huile (25) est reliée au carter de vilebrequin (12) du moteur à combustion interne (10) par l'intermédiaire d'une soupape (27) et d'un conduit de recyclage d'huile (28).

13. Dispositif selon la revendication 12, **caractérisé en ce que** la soupape (27) est une soupape commandée par pression différentielle qui s'ouvre automatiquement en présence d'une pression identique à la pression du système d'admission (13) ou inférieure à celle-ci dans le carter de vilebrequin (12).

14. Dispositif selon l'une des revendications 1 à 13, **caractérisé en ce que** le séparateur d'huile (2) en forme de passage (20) avec déviation de l'écoulement et avec la section d'afflux (21) subdivisée en plusieurs sections d'afflux partiel (22, 22') est l'unique séparateur d'huile (2) associé au moteur à combustion interne (10) pour le gaz de ventilation du carter de vilebrequin.

15. Dispositif selon l'une des revendications 1 à 13, **caractérisé en ce qu'**au moins un autre séparateur d'huile (5) pour le gaz de ventilation du carter de vilebrequin est monté en parallèle ou en série avec le séparateur d'huile (2) en forme de passage (20) avec déviation de l'écoulement et avec la section d'afflux (21) subdivisée en plusieurs sections d'afflux partiel (22, 22').

16. Dispositif selon la revendication 15, **caractérisé en ce que** l'au moins un autre séparateur d'huile (5) pour le gaz de ventilation du carter de vilebrequin présente un principe de fonctionnement différent de celui du séparateur d'huile (2) en forme de passage (20) avec déviation de l'écoulement et avec la section d'afflux (21) subdivisée en plusieurs sections d'afflux partiel (22, 22').

17. Dispositif selon la revendication 15 ou 16, **caractérisé en ce que** les deux ou plusieurs séparateurs d'huile (2, 5) présentent chacun une pression d'ouverture différente du gaz de ventilation du carter de vilebrequin à partir de laquelle il y a passage par le séparateur d'huile concerné (2 ; 5).

18. Dispositif selon l'une des revendications 15 à 17, **caractérisé en ce que** les deux ou plusieurs séparateurs d'huile (2, 5) sont regroupés en une unité sur le plan de la construction et dans l'espace.

19. Dispositif selon l'une des revendications 15 à 18, **caractérisé en ce que** l'au moins un autre séparateur d'huile (5) est un cyclone ou un séparateur à coalescence.

20. Dispositif selon l'une des revendications 1 à 19, **caractérisé en ce qu'**est située, dans la section d'afflux (21), une structure individuelle (4) qui subdivise celle-ci en les plusieurs sections d'afflux partiel (22, 22').

21. Dispositif selon l'une des revendications 1 à 19, **caractérisé en ce que** sont situées, dans la section d'afflux (21), au moins deux structures (4, 4') qui subdivisent celle-ci en les plusieurs sections d'afflux partiel (22, 22') et qui sont espacées axialement entre elles, les sections d'afflux partiel (22) d'une structure (4) présentant, par rapport aux sections d'afflux partiel (22') de l'autre structure (4'), un décalage transversalement par rapport au sens longitudinal des sections d'afflux partiel (22, 22').

22. Dispositif selon l'une des revendications 1 à 21, **caractérisé en ce que** la section des conduits polygonaux (41) est respectivement rectangulaire ou carrée ou en forme de parallélogramme ou hexagonale.

23. Dispositif selon l'une des revendications précédentes, **caractérisé en ce que** le corps de soupape (3) comporte, sur son côté opposé à la surface déflectrice (30), une partie de guidage (32) pour un guidage axialement mobile dans le conduit d'écoulement (11).

24. Dispositif selon l'une des revendications précédentes, **caractérisé en ce qu'**est prévue une butée d'ouverture (23') pour limiter la course de déplacement axiale du corps de soupape (3) dans le sens de l'ouverture de celui-ci.

25. Dispositif selon l'une des revendications 1 à 5 et 7 à 24, **caractérisé en ce qu'**est prévue une butée de fermeture (29) pour limiter la course de déplacement axiale du corps de soupape (3) dans le sens de la fermeture de celui-ci.

26. Dispositif selon l'une des revendications précédentes, **caractérisé en ce que** le corps de soupape (3), pour former une soupape de réglage du courant, coopère avec une deuxième section de passage (34) dans le sens opposé à celui du passage (20) dans lequel se produit la séparation d'huile.

27. Dispositif selon la revendication 26, **caractérisé en ce que** le corps de soupape (3) est réalisé, en aval, avec une partie conique ou oblique (35) qui est entourée par la deuxième section de passage (34).

28. Dispositif selon la revendication 26 ou 27, **caractérisé en ce que** le corps de soupape (3) est réalisé avec au moins un conduit de gaz (33) qui, étant donné un corps de soupape (3) fermant la deuxième section de passage (34), peut être traversé par du gaz de ventilation du carter de vilebrequin.
